# EUROPEAN PATENT SPECIFICATION

(11) **EP 1 057 328 B1**
(45) Date of publication and mention of the grant of the patent: **19.05.2004**
(21) Application number: 99959822.0
(22) Date of filing: 15.12.1999
(51) Int. Cl.: H04N 5/445, G06F 1/16, A63F 13/12, G09B 21/00

(54) **PORTABLE ELECTRONIC DEVICE, METHOD OF CONTROLLING THE DEVICE AND RECORDING MEDIUM FOR RECORDING DATA USED BY THE DEVICE**
TRAGBARES ELEKTRONISCHES GERÄT, KONTROLLVERFAHREN FÜR DAS GERÄT UND AUFZEICHUNGSMEDIUM ZUR AUFNAHME VON DURCH DAS GERÄT VERWENDETEN DATEN
DISPOSITIF ELECTRONIQUE PORTABLE, PROCEDE DE COMMANDE DE CE DISPOSITIF ET SUPPORT D'ENREGISTREMENT POUR ENREGISTRER LES DONNEES UTILISEES PAR LE DISPOSITIF

(30) Priority: 16.12.1998 JP 35772498
(43) Date of publication of application: 06.12.2000
(73) Proprietor: Sony Computer Entertainment Inc., Tokyo 107-0052 (JP)
(72) Inventor: KUTARAGI, Ken, Sony Computer Entertainment Inc., Tokyo 107-0052 (JP); HINO, Mariko, Sony Computer Entertainment Inc., Minato-ku, Tokyo 107-0052 (JP); SHIMAKAWA, Keiso, Sony Computer Entertainment Inc., Tokyo 107-0052 (JP)
(74) Representative: Hedley, Nicholas James Matthew
(86) International application number: PCT/JP1999/007037
(87) International publication number: WO 2000/036828

(56) References cited:
- WO-A-95/02232
- WO-A-98/47252
- WO-A-98/48377
- FR-A- 2 696 888
- US-A- 4 373 821
- US-A- 5 664 228
- PATENT ABSTRACTS OF JAPAN vol. 1997, no. 05, 30 May 1997 (1997-05-30) & JP 09 023389 A (MATSUSHITA ELECTRIC IND CO LTD), 21 January 1997 (1997-01-21)

## Description

### BACKGROUND OF THE INVENTION

### Field of the Invention

The present invention relates to a portable electronic device, method of controlling the same and a medium for recording data used by the device. More specifically, the present invention relates to a portable electronic device that is used as an auxiliary memory unit of an information device containing an entertainment system such as a video game unit, and a method and a software recording medium for operating this portable electronic device.

### Background of the Invention

A conventional memory card (child machine or ancillary machine) that is loaded into a host device such as an information device, e.g., a video game machine, and thus used is normally provided with an interface for connection with the main unit (parent machine or host machine) as an information device and a nonvolatile memory element for storing data.

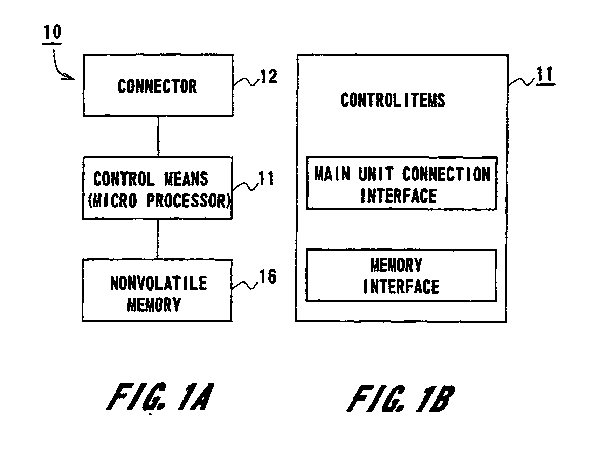

Fig. 1A shows an example of the constitution of the main elements of a conventional memory card. The conventional memory card 10 is provided with a control unit 11 for controlling the operation, a connector 12 for connection with a terminal provided inside the slot of the information device, etc., and a nonvolatile memory 16 for storing data, and the connector 12 and nonvolatile memory 16 are connected to the control unit 11.

The control unit 11 consists of a microcomputer. Additionally, a flush memory such as an EEPROM, for example, is used as the nonvolatile memory 16. Furthermore a microcomputer is used as the control means for interpreting the protocols in the connection interface with the information device, etc.

Fig. 1B shows the control elements in the control unit 11 of a conventional memory card 10.

Thus, conventional memory card 10 is provided only with a main unit connection interface for connecting with the main unit such as an information device and a memory interface for inputting/outputting data to/from the nonvolatile memory.

Additionally, conventional video game units such as household TV game devices possess a function whereby game data, etc., is stored in an auxiliary memory unit. The memory card is used as this type of auxiliary storage device for a video game unit.

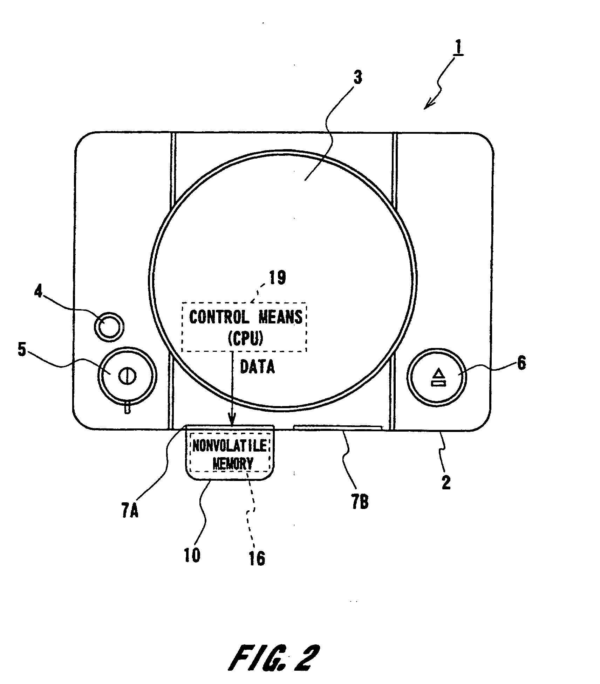

Fig. 2 shows an example of a conventional video game unit which uses a memory card as an auxiliary storage device. The main unit 2 of the conventional video game unit 1 is housed in a roughly square-shaped case, and includes a disk loading part 3, into the center portion of which is loaded an optical disk that is the recording medium on which the application program of the video game is recorded, a reset switch 4 for resetting the game as desired, a power switch 5, a disk operation switch 6 for operating the insertion of the aforesaid optical disk, and, for example, two slots 7A and 7B.

The memory card 10 that is used as the auxiliary storage device is inserted into slot 7A or 7B, and, for example, the results, etc., of a game that has been played on the video game unit 1 are sent from a control means (CPU) 19 and written into the nonvolatile memory 16. Multiple operating units (controllers), not shown in the drawing, are also connected to the slots 7A and 7B, allowing competitive games, etc., to be played simultaneously by multiple players.
In this connection, providing the ancillary machine that is connected through the memory card slot of the video game machine, etc., which is the host machine, with other functions to execute programs of a game has been considered (see WO-A-98/48377). Such an ancillary machine could be used unmodified as a portable electronic device, and by facilitating communication with other devices, could lead to an expanded range of applications and the creation of new demand. Moreover, use of such a portable electronic device as a remote commander for use with a television receiver and the like would be very convenient.

### SUMMARY OF THE INVENTION

It is an object of the present invention to provide a technique whereby a portable electronic device which can be used alone as an ancillary machine which can be connected to a host machine, is used as a remote control unit.

It is a further object of the present invention to allow visually impaired users to distinguish a remote control operation information aurally.

A portable electronic device, a control method and a recording medium according to the present invention are set out in claims 1, 7 and 10, respectively.

The portable electronic device according to the present invention, in order to solve the problems described above, can be connected to a host machine having program executing functions, but has input/output and operation functions independent of the host machine. The portable electronic device of the present invention comprises a memory means which stores recording data containing remote control voice data and a remote control program transmitted from the recording medium of the host machine; a control means which controls the execution of the remote control program stored in the memory means; an operation input means for operating the control means; and a sound generating means which generates sounds based on the remote control voice data wherein said control means changes or selects and outputs to the sound generating means remote control voice data in accordance with operation of the operation input means based on the remote control program.

In this way, by transmitting the recording medium remote control program of the host machine, the portable electronic device of the present invention is provided with the functions of a remote control unit, and can be used in a broad range of applications to satisfy various demands.

Moreover, since the present invention is constituted so that remote control voice data is changed or selected in accordance with the operation of the operating input means and is output to the sound generating means, even visually impaired users can distinguish the remote control operating information aurally.

Furthermore, the portable electronic device of the present invention may also be configured so as to include in the remote control program a frequency division program which divides remote control voice data, wherein the control means, along with detecting operation of the operation input means based on the remote control program, divides remote control voice data in accordance with a frequency division value corresponding to the operation detected and outputs said data to the sound generating means.

By such configuration whereby remote control voice data is divided and outputted to a sound generating means, the volume of remote control voice data to be transferred from the host machine and stored in the memory means can be reduced. This feature of the present invention has significant merit in the effective utilization of the memory means which has a limited memory capacity in terms of its being a portable electronic device for which size reduction is demanded.

Furthermore, the remote control electronic device of the present invention may be constituted so that multiple voice data segments each corresponding to at least the operations of the operation input means are included in the remote control voice data, and the control means, based on the remote control program, along with detecting the operation of the operation input means, selects and outputs to the sound generating means remote control voice data corresponding to the operation detected.

A control method for the portable electronic device of the present invention which can be connected to a host machine having program executing functions, and has input/output and operation functions independent of the host machine, comprises the steps of storing recording data including a remote control program and remote control voice data transferred from the recording medium of a host machine, in the portable electronic device, and changing or selecting, based on the remote control program, remote control voice data which is outputted according to operation by the user.

Moreover, according to the control method for the portable electronic device of the present invention, operation performed by the user is detected, based on the remote control program, and remote control voice data is frequency-divided according to a frequency division value corresponding to the detected operation and is outputted.

By means of the method whereby the remote control voice data is divided and outputted in this way, the volume of remote control voice data required can be reduced.

On the other hand, in the control method for the portable electronic device of the present invention, multiple segments of voice data corresponding at least to user operations may be included in remote control voice data and user operation is detected, based on the aforesaid remote control program, and remote control voice data corresponding to the operation detected is selected and outputted.

A recording medium for recording of data used in the portable electronic device of the present invention is loaded into the host machine which has a program executing function and records data that is transferred to the portable electronic device connected to the host machine, the recording medium containing in its recorded data a remote control program that is executed by the portable electronic device and remote control voice data that is outputted, based on the remote control program.

Here, the remote control program may be constituted so as to include a remote control program of a control object device whereby, along with detecting user operation, the aforesaid remote control voice data is changed or selected and outputted corresponding to the detected operation.

Moreover, the recording medium for recording data used in the portable electronic device of the present invention may be constituted so that the remote control program, along with detecting user operation, divides remote control voice data by a frequency division value corresponding to the detected operation and outputs this data from a sound generating means.

The recording medium for recording data used in the portable electronic device of the present invention may also be constituted so that multiple segments of voice data corresponding at least to user operations are included in the remote control voice data, and the remote control program has a function which, along with detecting user operation, selects and outputs remote control voice data corresponding to the operation detected.

In this specification, the term "rimokon" is an abbreviation of the term "remote control."

### BRIEF EXPLANATION OF THE DRAWINGS

Figs. 1A and 1B are diagrams showing a structural example of the essential parts of a conventional memory card unit;
Figure 2 is a diagram showing an example of the video game unit which uses a memory card as an auxiliary memory unit;
Figure 3 is a plan view showing the external appearance of the video game unit as a host machine which uses a portable electronic device as an ancillary machine according to an embodiment of the present invention;
Fig. 4 is a rear view showing the form of a slot in a video game unit used as a host machine;
Fig. 5 is a perspective view of the exterior of a video game unit used as a host machine;
Fig. 6 is a block diagram showing a specific example of the configuration of the main parts of a video game unit used as a host machine;
Fig. 7 is a plan view showing the exterior of a portable electronic device according to the present invention;
Fig. 8 is a perspective view showing the exterior of the portable electronic device according to the present invention;
Fig. 9 is a perspective view of the portable electronic device according to the present invention in a state in which the cover member is open;
Fig. 10 is a front view showing the exterior of the portable electronic device according to the present invention;
Fig. 11A and 11B are block diagrams showing an example of the configuration of the important parts of the portable electronic device according to the present invention;
Fig. 12 is a plan view explaining the wireless communication function of the portable electronic device according to the present invention;
Fig. 13 is a view for explaining the coordinated operation between the ancillary machine as an embodiment of the portable electronic device of the present invention and the video game unit main unit used as the host machine.
Fig. 14A and 14B show a CD-ROM which is a recording medium according to an embodiment of the present invention;
Fig. 15 is a flowchart showing the procedure for the downloading process on the host machine side;
Fig. 16 shows the menu screen used in the downloading process;
Fig. 17 is a flowchart showing the procedure for downloading on the ancillary machine, i.e., on the side of the portable electronic device;
Fig. 18 is a plan view for explaining the display content of the portable electronic device and the operating elements thereof;
Fig. 19A to 19C explain the operational display used when the portable electronic device of the present invention is made to function as a remote control unit;
Fig. 20 is a drawing showing an example of the "+" display in the operational display;
Fig. 21 is enlargement of the "+" display shown in Fig. 20;
Fig. 22 shows another example of the display in the operational display used when the portable electronic device of the present invention is made to function as a remote control unit;
Fig. 23 is an enlargement of the example of the display shown in Fig. 22;
Fig. 24 is a diagram showing the hierarchical structure of the operational display in the case where the portable electronic device of the present invention is made to function as a remote control unit when an air conditioner is made the object of control;
Fig. 25 is a flowchart of processing in the operational display in the case where a portable electronic device of the present invention is made to function as remote control unit;
Fig. 26 is a block diagram showing the constituent elements used in operational auxiliary functions of a remote control unit by voice, removed from the constituent elements of the portable electronic device shown in Figs. 11A and 11B;
Fig. 27 shows an example of the frequency division values of voice data corresponding to operational menu items in the case where the portable electronic device of the present invention is made to function as remote control unit;
Fig. 28 shows an example of the frequency division values of voice data corresponding to channel numbers of a television receiver when the portable electronic device of the present invention is made to function as remote control unit;
Fig. 29 is a control flowchart for the case in which the control unit executes a menu item sound generation function in the portable electronic device of the present invention;
Fig. 30 is a flowchart of control for the case in which the control means executes a channel selection sound generation function of the portable electronic device of the present invention; and
Fig. 31 is a flowchart showing an example in which a menu item sound generation function and a channel selection sound generation function are realized by means of a different constitution.

### DETAILED DESCRIPTION OF THE PREFERRED EMBODIMENTS

Preferred embodiments of the present invention are next described referring to the drawings. Here, the portable electronic device which serves as an embodiment of the present invention can be used both as a memory card used in an entertainment system such as a video game unit which serves as the host machine or the parent machine and alone as a portable miniature game machine and a remote commander. The host device is not limited to the video game machines, and the portable electronic device which serves as the ancillary machine or the child machine need not necessarily have a memory card function.

In the following description, first, an example of a video game machine as the host machine is described in which the portable electronic device which serves as an embodiment of the present invention is used as an ancillary machine.

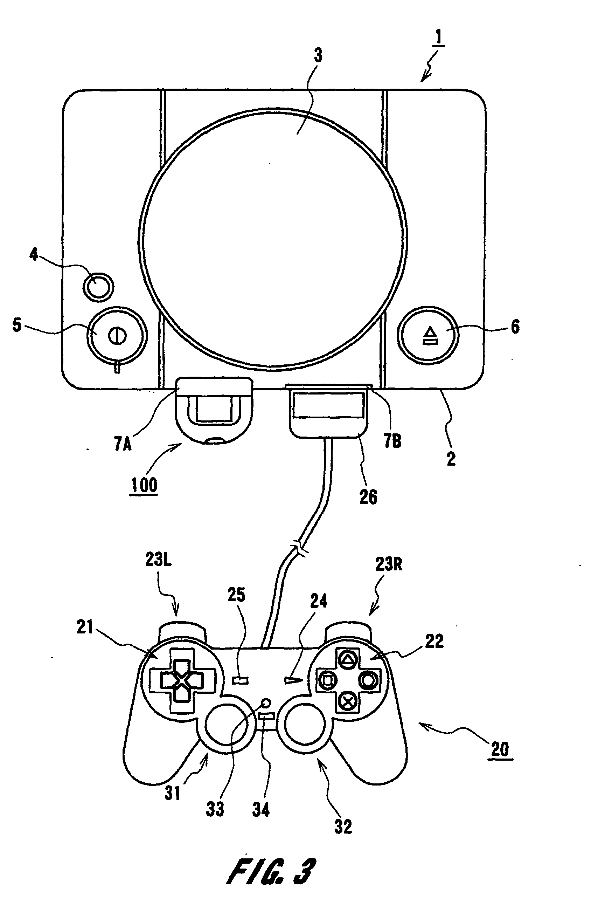

Fig. 3 shows the external appearance of a video game unit serving as the host machine to which the portable electronic device that serves as an embodiment of the present invention is attached. The video game unit 1 has the purpose of reading a game program recorded on an optical disk, for example, and executing the game in accordance with directions from the user (game player). Here the phrase "executing the game" means principally controlling the progress, display, sound effects, etc., of the game.

A main unit 2 of the video game unit 1 is housed in a roughly square-shaped case, and comprises a disk loading part 3, into the center portion of which is loaded an optical disk such as a CD-ROM that is the recording medium on which the application program of the video game is recorded, a reset switch 4 for resetting the game as desired, a power switch 5, a disk operation switch 6 for operating the insertion of the aforesaid optical disk, and, for example, two slots 7A and 7B.

The recording medium for supplying the application program is not limited to optical disks, and the application program may also be supplied via a communication line.

Two operating devices 20 can be connected to slots 7A and 7B, allowing two users to play competitive games, etc. Additionally, the aforesaid memory card or portable electronic device that serves as an embodiment of the present invention may also be inserted into slot 7A or 7B. Fig. 3 shows, as an example, a structure in which twin slots 7A and 7B are provided, but the number of slots is not limited to a twin system.

The operating device 20 has first and second operating parts 21 and 22, an L button 23L, an R button 23R, a start button 24, and a selection button 25, and also has operating parts 31 and 32 which are able to perform an analog operation, a mode selection switch 33, which selects the operating mode of these operating parts 31 and 32, and a display part 34, which displays the operating mode selected. A vibrating mechanism not shown in the figure is also provided inside the operating devices 20.

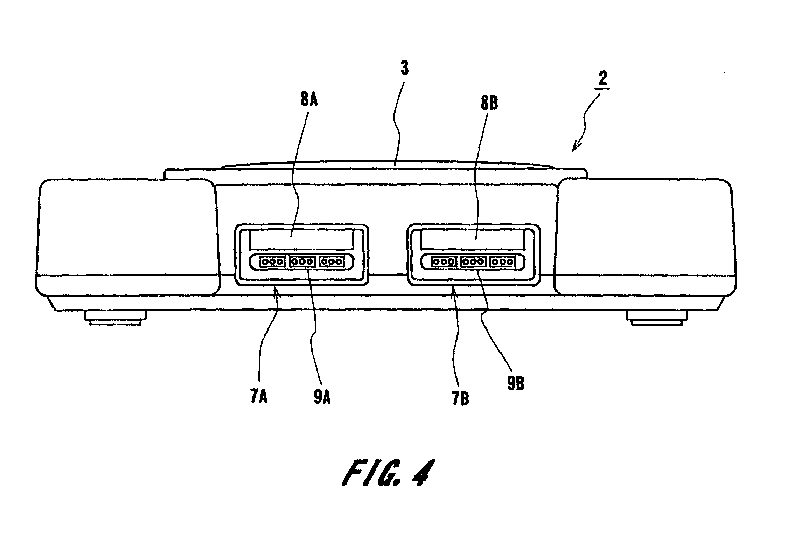

Fig. 4 shows the form of slots 7A and 7B provided on the front face of the main unit 2 of the video game unit 1.

In the embodiment, slots 7A and 7B each are formed in two stages. The upper stages are provided with memory card insertion parts 8A and 8B, into which the memory card 10 or a portable electronic device 100 described below is inserted, and the lower stages are provided with controller connection parts (jacks) 9A and 9B, to which the connection terminal part (connector) 26 of the controller 20 is connected.

The insertion openings (slots) of the memory card insertion parts 8A and 8B are formed so as to have an oblong shape in the horizontal direction, and the corners at both ends on the lower side thereof are given a more rounded form than the corners at both ends on the upper side, thereby providing a structure which prevents the memory card from being mistakenly inserted upside-down. The memory card insertion parts 8A and 8B are also provided with shutters which protect the connection terminals that are provided inside in order to obtain electrical connection.

The controller connection parts 9A and 9B also are formed so that the two comers on the lower side of the insertion openings, which have an oblong shape in the horizontal direction, are given a more rounded form than the corners at both ends on the upper side, thereby providing a structure which prevents the connection terminal part 26 of controller 20 from being mistakenly inserted upside-down, and also have structure in which the insertion holes are given a different form than the memory card insertion parts 8A and 8B, in order to prevent the insertion of the memory card by error.

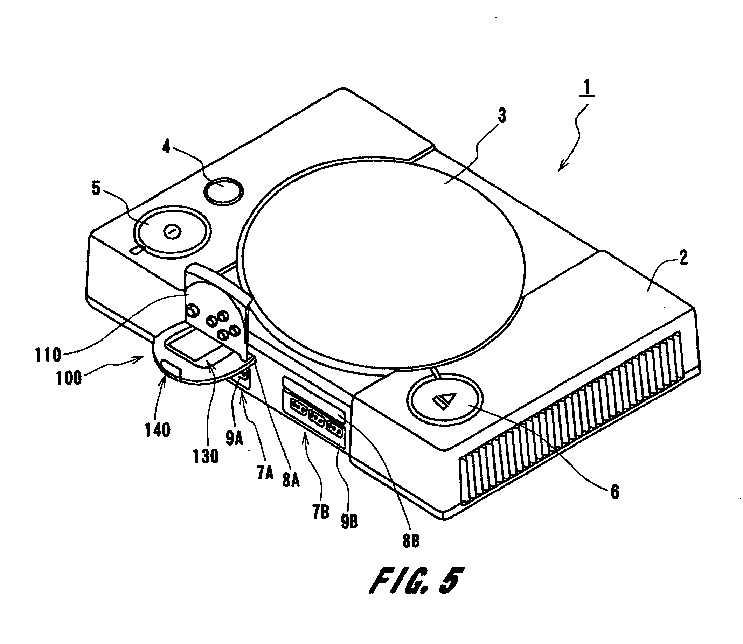

Fig. 5 shows a state in which a portable electronic device 100 which serves as an embodiment of the present invention described below is inserted into the memory card insertion part 8A of the slot 7A on the front of the video game machine 1.

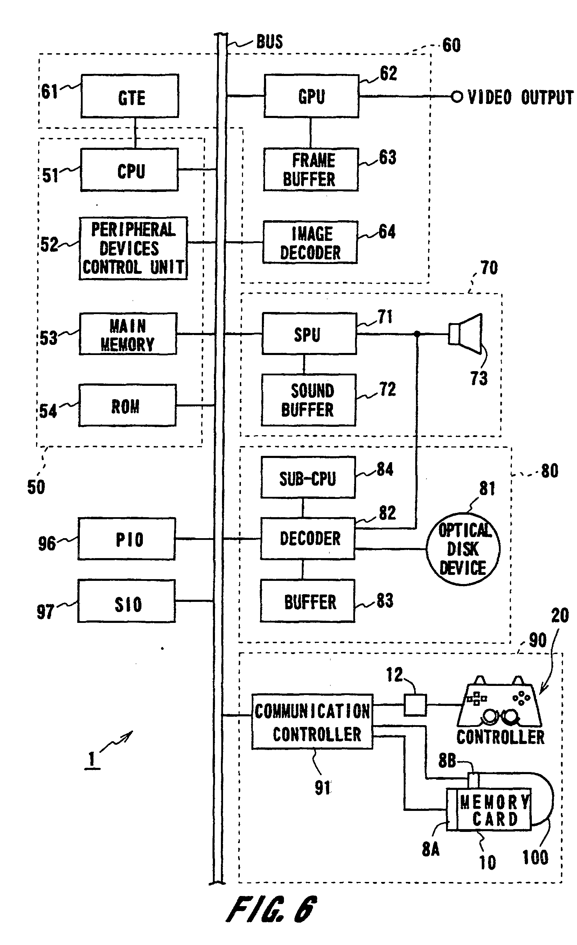

Next, Fig. 6 is a block diagram schematically showing an example of a circuit configuration of the important parts of the video game unit 1.

The video game unit 1 includes a control system 50 having a central processing unit (CPU) 51 and its peripherals, a graphics system 60 having a graphic processing unit (GPU) 62 or like device which performs graphic functions on a frame buffer 63, a sound system 70 comprising a sound processing unit (SPU) or like device which generates music, sound effects, etc., an optical disk control part 80, which controls the optical disk on which application programs are recorded, a memory card 10 which stores signals from the controller 20 and to which the commands from the user are input, game settings, etc., a communication control part 90, which controls the input and output of data from the portable electronic device 100 described below and a bus BUS or the like by which the aforesaid parts are connected.

The control system 50 includes a CPU 51, a peripheral control part 52, which performs control functions such as an interrupt control and direct memory access (DMA) transfer control, a main memory 53 comprising a random access memory (RAM), and a read-only memory (ROM) 54, which stores programs for the so-called operating system, etc., that controls the main memory 53, graphics system 60, sound system 70, etc. The term "main memory" here refers to one that is able to execute programs on its memory.

The CPU 51 performs control of the entire video game unit 1 by running the operating systems stored in the ROM 54, and comprises, for example, a 32-bit RISC (restricted instruction set computer)-CPU.

When the power is switched on, this video game unit 1 runs the operating systems stored in the ROM 54, and thereby the CPU 51 of the aforesaid control system 50 carries out control of the aforesaid graphics system 60, sound system 70, etc. When the operating systems are run, the CPU 51, after performing general initiation of the video game unit 1 such as operation validation, controls the aforesaid optical disk control part 80, and runs the application program such as a game stored in the optical disk. As it runs this game or other program, the CPU 51 controls the graphics system 60, sound system 70, etc., in accordance with input from the user, and controls the display of images in the generation of sound effects and music.

Additionally, the graphics system 60 is provided with a geometry transfer engine (GTE) 61, which performs processing such as coordinate transformation, a GPU 62, which performs plotting in accordance with plotting directions from the CPU 51, a frame buffer 63, which stores the images plotted by the GPU 62, and an image decoder 64, which decodes image data that has been compressed and encoded by means of orthogonal transformation such as discrete cosine transformation.

The GTE 61 is provided with, for example, a parallel processor which performs a plurality of calculations in parallel, and is able to perform at a high speed coordinate transformation, light source calculation, and matrix or vector operations in accordance with the operation requirements from the aforesaid CPU 51. Specifically, for example, when this GTE 61 performs an operation of flat shaping whereby plotting is performed in the same color on 1 triangular polygon, it is able to perform the coordinate calculation of a maximum of about 1,500,000 polygons in 1 sec, and by this means, high-speed coordinate calculation can be performed while the load on the CPU 51 in this video game unit is reduced.

Additionally, the GPU 62 performs plotting of polygons, etc., on the frame buffer 63 in accordance with plotting commands from the CPU 51. The GPU 62 is able to perform plotting of a maximum of approximately 360,000 polygons in 1 sec.

Furthermore, the frame buffer 63 has a so-called dual port RAM, and is able to perform plotting from the GPU 62 or data transfer from the main memory and read-out of data for display at the same time. The frame buffer 63 has a capacity of, e.g., 1 MB, and is handled as a matrix composed of 1024 horizontal pixels and 512 vertical pixels each having 16 bits. This frame buffer 63, in addition to a display region that is output as video output, is also provided with a color lookup table (CLUT) region, which stores a CLUT which is referred to when the GPU 62 performs the plotting of polygons, etc., and a texture region, which stores the raw material (texture) to be inserted (mapped) into the polygons, etc., plotted by the GPU 62 by coordinate transformation during plotting. The CLUT region and texture region are automatically changed according to changes, etc., in the display region.

The aforesaid GPU 62, in addition to the aforesaid flat shading, is able to perform Gouraud shading, which determines the color inside a polygon by interpolation from the color of the vertices of the polygon, and texture mapping whereby a texture stored in the aforesaid texture region is pasted on a polygon. When Gouraud shading or texture mapping is performed, the aforesaid GTE 61 is able to perform the coordinate calculation of a maximum of approximately 500,000 polygons in 1 sec.

Additionally, the image decoder 64, by means of control from the aforesaid CPU 51, decodes image data for still or moving pictures that is stored in the main memory 53 and stores it in the main memory 53.

The reproduced image data is stored via the GPU 62 in the frame buffer 63, and thereby can be used as background for images plotted by the aforesaid GPU 62.

The sound system 70 is provided with an SPU 71, which generates music, sound effects, etc., as directed from the CPU 51, a sound buffer 72, in which sound wave data, etc., from this SPU 71 is stored, and speakers 73, which emanate the music, sound effects, etc., generated by the SPU 71.

The SPU 71 is provided with an adaptive differential PCM (ADPCM) decoding function, whereby voice data obtained by, e.g., performing ADPCM on 16-bit voice data using a 4-bit differential signal, is reproduced, a reproducing function whereby sound effects, etc., are obtained by reproducing waveform data stored in the sound buffer 72, a modulation function, which modulates and reproduces waveform data stored in the sound buffer 72, etc.

Being provided with these functions, the sound system 70 can be used as a so-called sampling sound source that generates music, sound effects, etc., based on waveform data stored in the sound buffer 72 as directed from CPU 51.

The optical disk control part 80 is provided with an optical disk unit 81, which reproduces programs, data, etc., recorded on the optical disk, a decoder 82, which decodes programs, data, etc., that have been recorded with an error correction code (ECC) added, and a buffer 83, which accelerates the read-out of data from the optical disk 81 by temporarily storing data from the optical disk device. The sub-CPU 84 is connected to the aforesaid decoder 82.

Additionally, as the voice data or audio data(referred to as audio data hereinafter) that is read from the optical disk unit 81 and recorded on the optical disk, in addition to the aforesaid ADPCM data, so-called PCM data obtained by analog/digital conversion of audio signals can also be used.

As ADPCM data, for example, audio data recorded by representing the differential in 16-bit digital data in 4 bits, is decoded by the decoder 82, then is supplied to the aforesaid SPU 71, and after processing such as digital/analog conversion is performed by the SPU 71, is used to drive the speaker 73.

Additionally, as PCM data, for example, audio data recorded as 16-bit digital data is decoded by the decoder 82 and then used to drive the speaker 73.

The communication control part 90 includes a communication control unit 91, which controls communications with the CPU 51 via the bus BUS, and said communication control unit 91 is provided with a controller connecting part 9, to which the controller 20 that inputs directions from the user is connected, and memory card insertion parts 8A and 8B, to which the memory card 10, which serves as an auxiliary memory unit for storing game setting data, etc., and the portable electronic device 100 described below are connected.

The controller 20 connected to the controller connecting parts 9A and 9B has, e.g., 16 direction keys, which allow the user to input directions, and in accordance with directions from the communication control unit 91, transmits status of the direction keys at a rate of approximately 60 times per second to the communication control unit 91 by synchronous communication. The communication control unit 91 then transmits the direction keys status of the controller 20 to the CPU 51.

By this means, directions from the user are input into the CPU 51, and the CPU 51 performs processing according to the directions from the user based on the game program, etc., it is running.

Here, in performing program read-out; image display, or plotting, etc., it is necessary to transmit large quantities of image data among the aforesaid main memory 53, GPU 62, image decoder 64, decoder 82, etc., at a high speed. For this reason, in this video game unit, by performing control from a peripheral control part 52 bypassing the CPU 51, it is possible to perform so-called DMA transmission, whereby data can be transmitted directly among the aforesaid main memory 53, CPU 62, image decoder 64, decoder 82, etc. By this means, the load placed on the CPU 51 by data transmission can be lightened, and high-speed data transmission can be achieved.

Furthermore, when it is necessary to store setting data, etc., of a game that is being run, the aforesaid CPU 51 transmits stored data to the communication control unit 91, and the communication control unit 91 writes this data from the CPU 51 into the memory card 10 or portable electronic device 100 that is inserted into the aforesaid memory card insertion part 8A or memory card insertion part 8B.

Here, a protection circuit for preventing electrical damage is incorporated into the aforesaid communication control unit 91. The aforesaid memory card 10 and portable electronic device 100 are isolated from the bus BUS, and can be detached while the power of the device main unit is switched on. Accordingly, when, for example, the storage capacity of the aforesaid memory card 10 or portable electronic device 100 is no longer sufficient, a new memory card can be inserted without switching of the power to the device main unit. Thus, a new memory card can be inserted without losing necessary game data required to be backed up, and the necessary game data can be written into the new memory card.

The parallel I/0 interface (PIO) 96 and serial I/0 interface (SIO) 97 are interfaces for connecting the video game unit 1 with the aforesaid memory card 10 or portable electronic device 100.

Next, the portable electronic device that serves as an embodiment of the present invention is described.

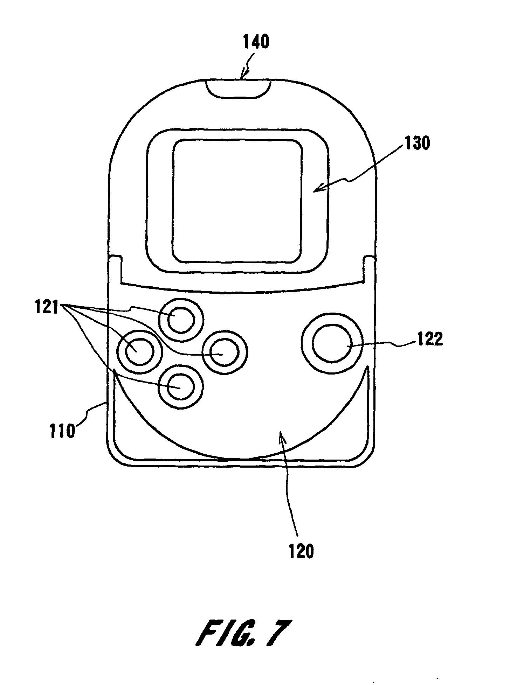

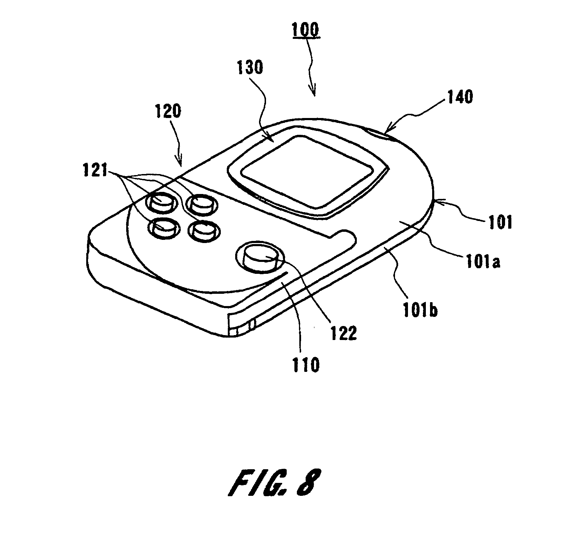

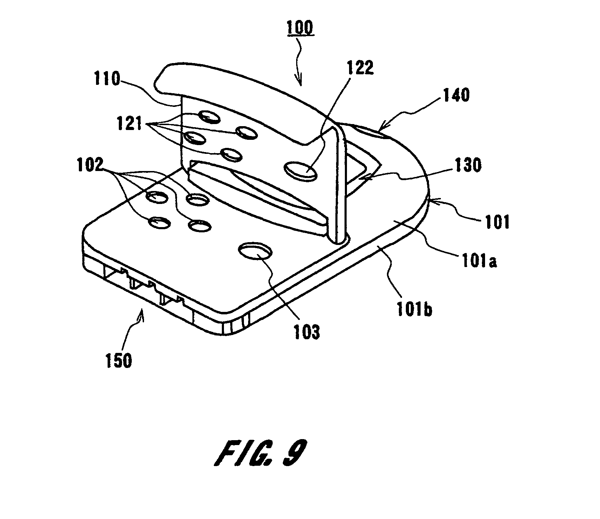

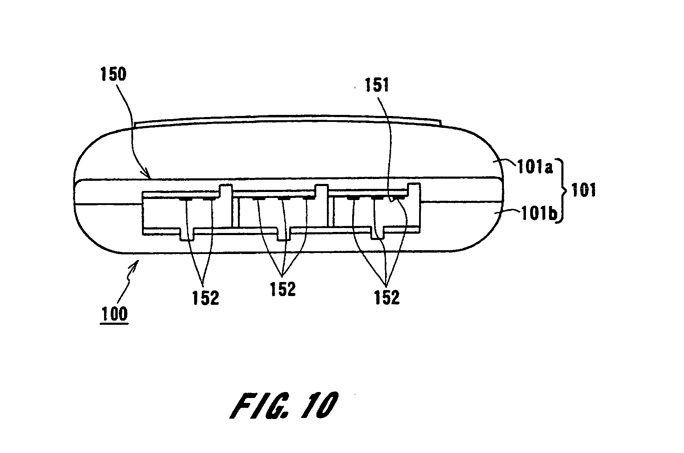

Figs. 7 through 10 show the exterior of the portable electronic device 100 of the present invention. Fig. 7 is a plan view of a portable electronic device 100, Fig. 8 is a perspective view showing the state in which the cover member 110 for protection of the connector parts is closed, Fig. 9 is a perspective view of a state in which the cover member 110 is open, and Fig. 10 is a front view of housing 101 with a lid member removed.

As shown in Figs. 7 through 10, the portable electronic device 100 of the present invention is constituted so as to have a housing 101 and is provided with an operating part 120 having one or more operating elements 121 and 122 for performing event input, various selections, etc., the display part 130, comprising a liquid crystal display (LCD) or similar device, and a window part 140 for wireless communication by infrared rays, for example, using a wireless communication means described below.

The housing 101 comprises an upper shell 101a and lower shell 101b, and houses a substrate 151 (see Fig. 10) on which a memory element and the like are mounted. This housing 101 can be inserted into a slot 7A or 7B in the main unit of the video game unit 1, and on the side face of one side thereof is provided with a connector part 150 on which an oblong window is formed.

The window part 140 is formed on the front-end portion of the housing 101, which is formed in a roughly semicircular shape. The display part 130 is formed on the upper face of the housing 101 and occupies approximately half of the region of this upper face positioned near the window part 140. The operating part 120 is disposed on the part which forms the side opposite to the window part 140 on the upper face of the housing 101, occupying approximately half of the surface of this upper face. This operating part 120 is formed in a roughly square shape and is supported so that it can be turned (opened and closed) in relation to the housing 101, comprising a cover member 110, which has one or more operating elements 121 and 122, and switch depression parts 102 and 103, which are placed in positions where they can be opened and closed by means of said cover member 110 on the housing 101.

The operating elements 121 and 122 are arranged so as to be pierced through the cover element 110 from the upper face to the lower face of the cover element 110. These operating elements 121 and 122 are supported by means of said cover element 110 and can be moved in a protruding or sinking direction in relation to the upper face of the cover member 110.

The switch depression parts 102 and 103 have depression elements that can be moved in a protruding or sinking direction in relation to the upper face of the housing 101 and are held on said housing 101. The depression elements when depressed from above depress a depression switch such as a diaphragm switch formed on the surface of the substrate 151 inside the housing 101.

The switch depression parts 102 and 103 are placed in a position corresponding to the position of the operating elements 121 and 122 when the cover member 110 is closed. Specifically, when the cover member 110 is in its closed position, if either of the operating elements 121 and 122 is pressed in a sinking direction with regard to the upper face of the cover member 110, this operating element 121 or 122 depresses the corresponding depression switch inside the housing 101 via the depression element of the corresponding switch depression part 102 or 103.

Inside the window of the connector part 150, as shown in Fig. 10, the power and signal terminals 152 are arranged together on the substrate 151.

The form, dimensions, etc., of the connector part 150 are made so as to be compatible with a conventional memory card 10 used in the video game unit 1.

Fig. 11A is a block diagram showing an example of the configuration of the main parts of the portable electronic device.

The portable electronic device 100, like the conventional memory card 10 described above, is provided with a control unit 41 for controlling its operation, a connector 42 for connecting with the slot of the information device, etc., and a nonvolatile memory 46 which is an element used to store data.

Additionally, a semiconductor memory device such as a flush memory, in which the recording status remains even after power is cut off, may be used as the nonvolatile memory 46. The portable electronic device 100 according to the present invention is constituted so as to be provided with a battery 49 as described below, but it may also use a static random access memory (SRAM) that is able to input and output data at a high speed as nonvolatile memory 46.

The portable electronic device 100 differs in that, in addition to the constitution described above, it is also provided with an operation (event) input unit 43 such as operating buttons for operating the programs that are stored in it, a display unit 44 such as a liquid crystal display (LCD), which serves as a display means for displaying various types of information according to the aforesaid program, a wireless communication device 48, for transmitting and receiving data with another memory card, etc., by means of an infrared rays, etc., and a battery 49, which provides power to the aforesaid parts.

Having the above arrangement, the portable electronic device 100 has a conventional function as a memory card. Specifically, the portable electronic device 100 is inserted into either of memory-card insertion slots 8A, 8B respectively provided at the slots 7A, 7B of the video game device serving as the host machine, and can be used as a memory card dedicated for one of a plurality of operation devices 20 connected to the video game device1. For example, if two users (two game players) play a game, two portable electronic devices 100 can respectively record their results of the game.

The control unit 41 consists of a microcomputer; for example, and has a program memory part 41a which serves as the program storage means.

The portable electronic device 100 also houses the miniature battery 49 as a power supplying means. Thus, it can be operated independently even after being removed from the slot 7A or 7B of the video game unit 1 that is the host machine. A rechargeable secondary battery may also be used as the battery 49. The portable electronic device 100 (ancillary machine) is constituted so that when it is inserted into a slot 7A or 7B of the video game unit 1 that is the host machine, it is supplied with power from the host video game unit 1. That is, a power terminal 49t is connected to the connection terminal of the battery 49 with a diode 49d interposed therebetween to prevent reverse flow, and inserted into a slot on the host machine such as the aforesaid video game unit 1, power is supplied from the host machine to the portable electronic device 100, and when a secondary battery is used, recharging of the secondary battery can also be performed.

The portable electronic device 100 is further provided with a clock 45, a speaker 47 or the like which is a sound emanating means that emanates sound in accordance with the aforesaid program, or the like. The aforesaid parts are each connected to the control unit 41 and are operated under the control of the control unit 41.

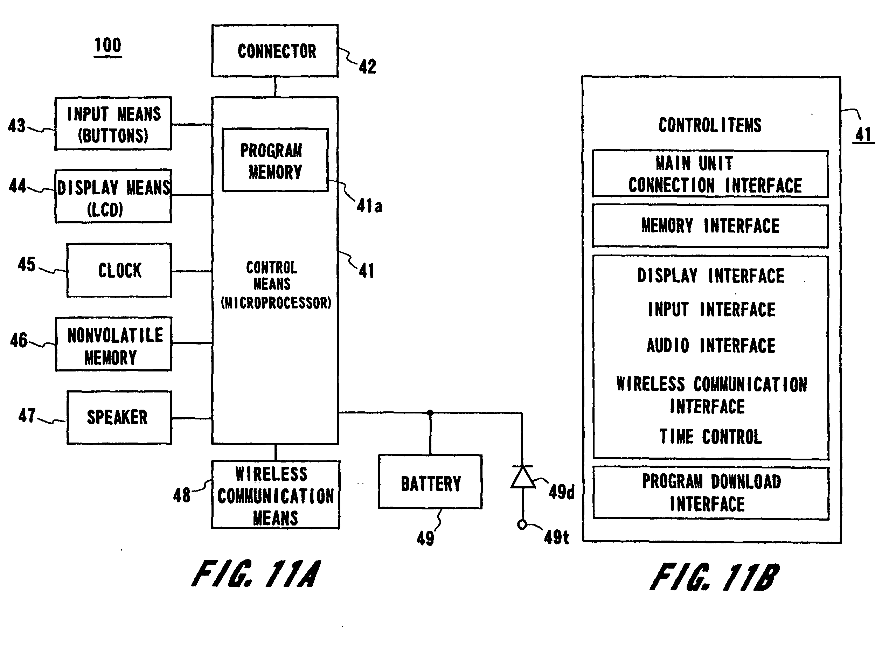

Fig. 11B shows control elements of the control unit 41. In the conventional memory card 10, only a main unit connection interface for connection with the information device and a memory interface for inputting and outputting data to and from the memory are provided. However, in the portable electronic device 100 of the present invention, in addition to the aforesaid interfaces, a display interface, an operating input interface, a voice interface, a wireless communication interface, a clock control, and a program download interface are also provided.

Thus, since the portable electronic device 100 is constituted so as to provide the control unit (microcomputer) 41 with an interface (driver) for controlling the functions added by means of this embodiment independently from the main unit (host machine) connection interface and nonvolatile memory control that are its conventional functions, compatibility with the conventional functions can be maintained.

Moreover, since the portable electronic device 100 is constituted so as to be provided with features such as an input means 43 such as button switches for operating the program being run and a display unit 44, which uses a liquid crystal display (LCD), etc., when running game applications, it can be used as a portable game unit.

Furthermore, since this portable electronic device 100 has a function whereby application programs downloaded from the main unit of the video game unit 1 are stored in a program memory part 41a in the microcomputer 41, application programs and various types of driver software that are run on the portable electronic device 100 can be easily changed.

As explained above, the portable electronic device 100 of the present invention is able to control operations independently from the video game unit 1. Thus, on the portable electronic device 100 side, data produced by applications stored in the program memory part 41a that is the program storage means can be created independently from the application software on the side of the video game unit 1. Furthermore, coordinated operation (linking) between the portable electronic device 100 and video game unit 1 also can be achieved by exchanging this data with the video game unit 1.

Moreover, since the portable electronic device 100 is provided with a clock 45, time data can be shared with the side of the video game unit 1. Specifically, not only can time data be mutually synchronized, but also data for controlling in real time the progress of the games being run independently can be shared.

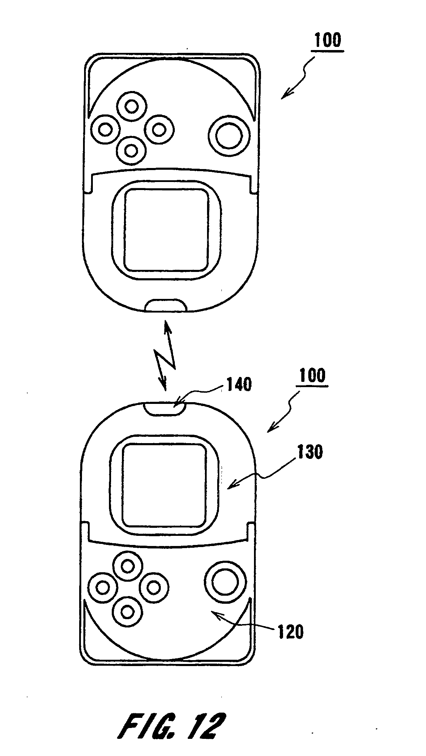

Fig. 12 schematically shows the state in which wireless communication is performed between portable electronic devices 100 according to the present invention. In this way, by sending and receiving data via the window part 140 which forms a wireless communication window for carrying out wireless communication by infrared rays, etc., in the wireless communication device 48, the portable electronic device 100 is able to exchange internal data with a plurality of memory cards. The aforesaid internal data may also include data stored in the memory means in a memory card transferred from an information device such as a video game unit.

In the embodiment described above, the portable electronic device 100 is used as an auxiliary memory unit of the video game unit, but the object of application is not limited to video game units, and the device may also be used, e.g., for retrieval of various types of information.

As described above, the portable electronic device 100 is able to share with the main unit of a video game unit 1 game data produced by a microcomputer 41 as a control means, time data obtained by the clock 45 in the memory card, data produced by a separate memory card and obtained through the wireless communication device 48, etc.

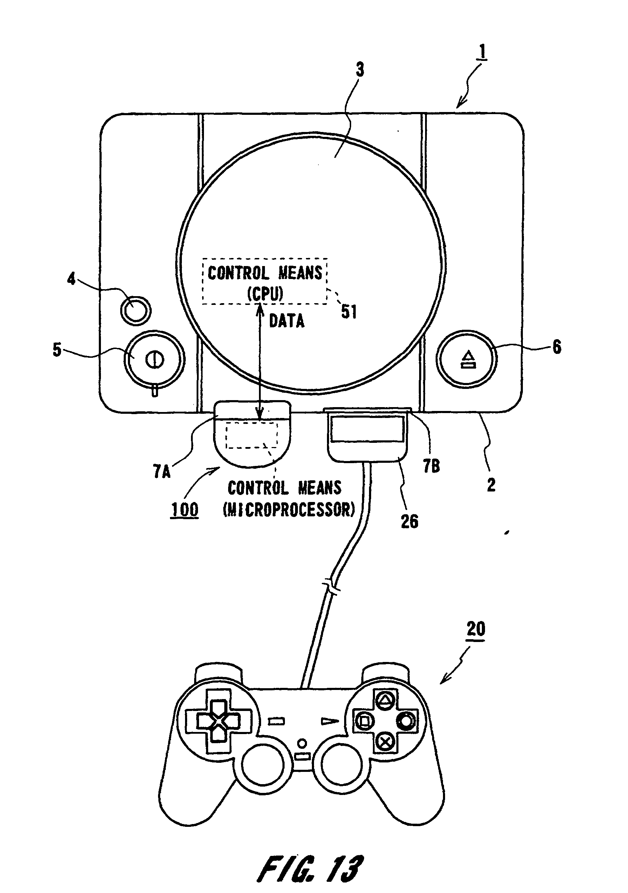

Fig. 13 schematically shows the state in which coordinated operation is performed between a video game unit 1 as a host machine and a portable electronic device 100 as an ancillary machine.

As a coordinated operation, an example is described in which an optical disk (CD-ROM), as a recording medium on which an application software program is recorded, is loaded into the host machine video game unit 1, and an application software program read from this disk is transferred (downloaded) to the portable electronic device 100 serving as an ancillary machine with the portable electronic device 100 being inserted into slot 7A or 7B in the main unit of the video game unit 1.

Moreover, it is possible to carry out a coordinated operation in which the portable electronic device 100 serving as an ancillary machine independently executes an application software program downloaded thereto from the video game unit 1 serving a host machine and the results of the above execution are exchanged between the portable electronic device 100 and the video game unit 1.

Attribute data on the persons that appear in a so-called role-playing game to be run on host video game device 1 along with their character attributes (i.e., data indicative of degree of growth, personality, etc.) is downloaded to the ancillary portable electronic device 100. By training the personalities and characters that appear in a program executed by microprocessor 41 in the ancillary-machine portable electronic device 100, their attributes are modified independently of the program that is executed on the main unit of the host-machine video game device 1.

The portable electronic device 100 according to an embodiment of the invention is constituted so as to operate independently, and its small size provides convenient portability. Thus a user (game player) can carry around and raise at any time the personalities and characters that appear in a program executed on this portable electronic device 100. The user can also transfer (upload) the attributes of the appearing personalities and characters trained by him from portable electronic device 100 to the main unit of video game device 1. In this case, appearing personalities and characters whose attributes have changed can be brought into and run on a program that is executed on the host-machine video game device 1.

There has been described that the portable electronic device 100 serving as an ancillary machine can be used as a portable game machine in comparison with the video game unit 1 and it can execute the video game in a coordinated operation with the video game unit.

However, the present inventors, by further development of the present invention, breaking free of a conventional game unit, arrived at the idea of using the portable device 100 as an operating device having independent input/output and operating functions. In other words, the portable electronic device 100 has been further developed so as to become an independent game unit by downloading, and was provided with the function of a remote control unit by the downloading of software.

Moreover, since this ancillary machine, i.e., the portable electronic device 100 itself, has a size which allows it to fit into the palm of the hand of an adult, for example, the display part 130 has a limited surface area, and the operating part 120 as well has only a few operating elements 121 and 122. Thus, it is necessary to provide functions that substitute for the numerous input operation buttons on a remote control unit provided as accessory to a normal television receiver, etc. Accordingly, in this embodiment, using a small display part 130 and only a few operating elements 121 and 122, a means of performing an easy-to-understand operation by means of a display and operation following the thought processes of the user was devised.

Furthermore, due to the present invention it is possible to recognize the contents of the remote control operation by changes in voice for visually impaired users.

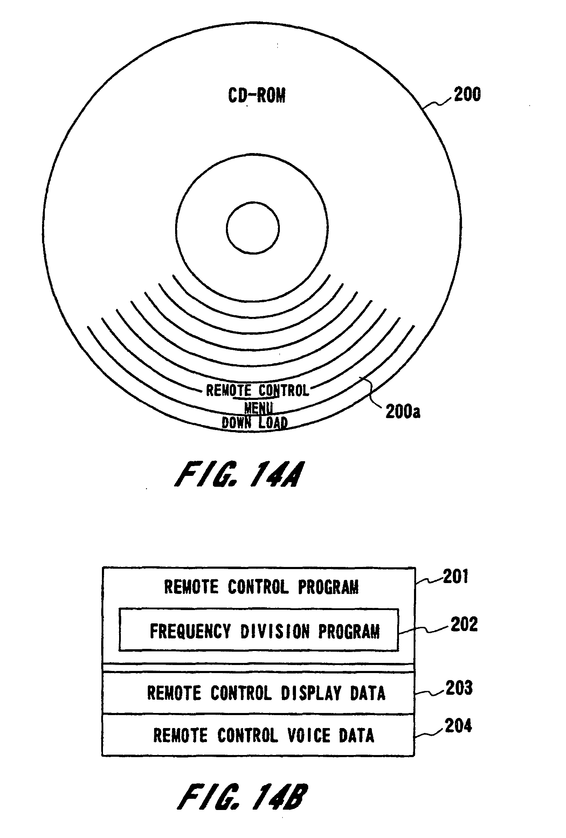

Fig. 14A and 14B show an example of a recording medium which records data downloaded from the video game unit 1, i.e., the host unit, to the portable electronic device 100, i.e., the ancillary unit.

Fig. 14A shows an optical disk (CD-ROM) 200 used as the recording medium. On a recording face 200a of the CD-ROM 200, programs and various types of data for downloading to the portable electronic device 100, e.g., downloading programs executed when downloading recording data to the portable electronic device 100, menu display programs for displaying the download menu, etc., are recorded.

Specifically, in this embodiment, in order to make the ancillary machine, i.e., the portable electronic device 100, function as a remote control unit, a remote control program 201 and various types of data, such as remote control display data 203 and remote control voice data 204, are recorded on the recording face 200a of the CD-ROM 200 as data for downloading to the portable electronic device 100, as shown in Fig. 14B.

Here, the remote control program 201 is a control program for making the portable electronic device 100 function as remote control unit, and based on this remote control program 201, the control unit 41 (see Figs. 11A and 11B) of the portable electronic device 100 carries out control operations. The remote control program 201 also contains a frequency division program 202 for the frequency division of the remote control voice data 204.

The control object device (device operated by remote control) when the portable electronic device 100 is made to function as a remote control unit, for example, may be a television receiver, a VTR recorder, an air conditioner, etc. For example, switching on of a television receiver by remote control, channel selection or volume selection of the television receiver, remote control switching on of a VTR recorder, channel selection and operation selection of the VTR recorder, switching on of an air conditioner, operation selection of the air conditioner, etc., can be performed by remote control using the portable electronic device 100.

Furthermore, in addition to the aforesaid downloading data relating to remote control, programs and display data, etc., which provide the portable electronic device 100 with a calculator function may also be recorded on the recording face 200a of the CD-ROM 200.

Next, the process of transferring (downloading) data recorded on the CD-ROM 200 will be described.

In the initial step S1 the CD-ROM 200 loaded onto the disk loading unit 3 of the host machine is driven, in step S2 a menu display program recorded in the CD-ROM 200 is read, and in succeeding step S3 downloading menu is displayed.

In Step S4, the process branches depending upon which items of the downloading menu is selected. Specifically, if any item of the downloading menu is selected, then it is determined as "YES" and the process advances to step S5. If on the other hand no item thereof is selected, then it is determined as "NO" and the downloading menu is continuously displayed.

In step S5 a preview of the selected downloading menu is displayed. The process then advances to step S6.

At Step S6, the process branches according to whether or not the selected downloading menu is confirmed. Specifically, if the selected downloading menu is confirmed, then it is determined as "YES" and the process advances to step S7. If on the other hand the selected downloading menu is not confirmed, then it is determined as "NO" and the downloading menu is continuously displayed.

In step S7, the recorded data concerning the selected and confirmed menu is downloaded to the ancillary machine. Thus, a series of the downloading processings carried out by the host machine are ended.

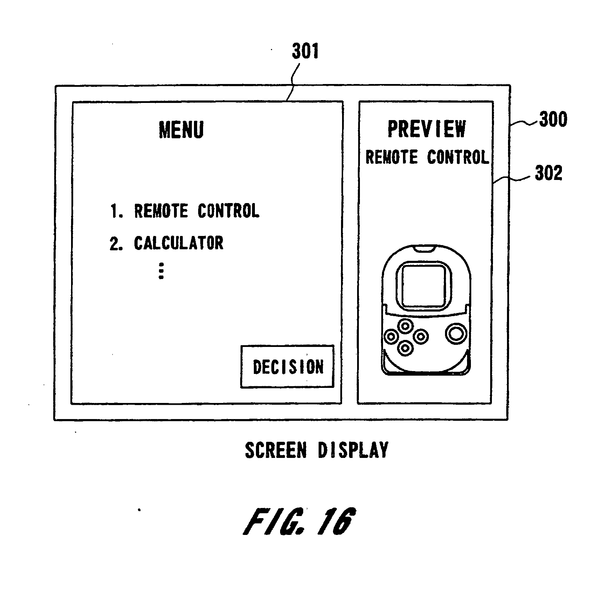

Fig. 16 shows a screen displayed when the above-mentioned downloading processing is carried out. This display screen is displayed by utilizing a television receiver connected to the host machine, for example.

As shown in Fig. 16, a substantially rectangular display window 301 and a substantially rectangular preview window 301 are respectively opened on the left and upper right sides of the display screen 300.

The downloading menu is displayed in the display window 301, in which the menu item selected in step 4 is displayed inverted. In the preview window 302, a preview image of the selected menu item is displayed

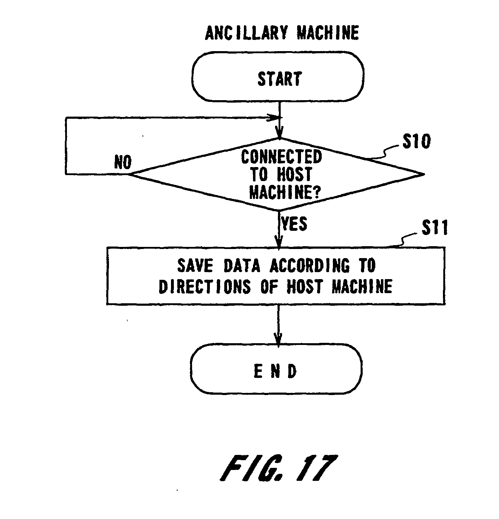

Fig. 17 is a flowchart showing a series of processings carried out by the portable electronic device 100 serving as the ancillary machine when data recorded in the CD-ROM 200 is transferred (downloaded).

In the initial step S10, the process branches depending upon whether or not the portable electronic device 100 is connected to the host machine. Specifically, if the portable electronic device 100 is connected to the host machine, then it is determined as "YES" and the process proceed to step 11. If on the other hand the portable electronic device 100 is not connected to the host machine, then it is determined as "NO" and the process returns. In step S11, data downloaded in accordance with commands from the host machine is saved, and then a series of the processing is ended.

Thus, it is possible to download the data recorded in the CD-ROM 200 from the host machine to the portable electronic device 100. This downloading processing allows the data to be stored in the non-volatile memory 46 of the portable electronic device 100.

The embodiment will be further described on the assumption that in order for the portable electronic device 100 serving as the ancillary machine to have function of a remote commander device, all of a remote control program 201, a remote control display data 203, and a remote control audio data 204 are downloaded to the portable electronic device 100.

Specifically, all of the remote control program 201, the remote control display data 203, and the remote control audio data 204 are stored in the non-volatile memory 46 (see Fig. 11) of the portable electronic device 100.

When the portable electronic device 100 is activated, the first remote control program 01 is written in the program memory 41a in the control means 41 shown in Fig. 11A and then the portable electronic device 100 functions as a remote commander device based on the remote control program 201. Specifically, the following operations are carried out under the control of the control means 41 (see Fig. 11A) based on the remote control program.

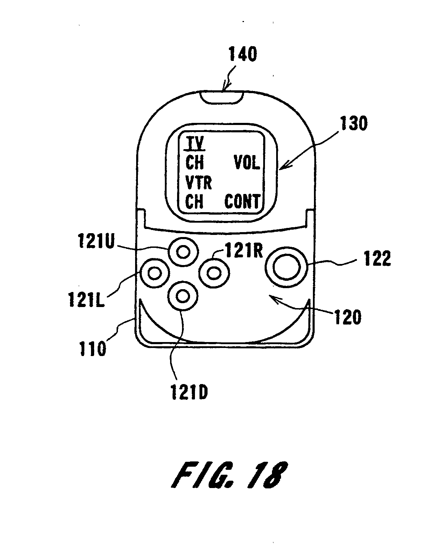

In accordance with the remote control program 201, upon its first activation, an initial screen shown in Fig. 18, for example, is displayed on a display unit 130 of the portable electronic device 100.

As an initial screen, the operating menu of a television receiver, VTR recorder, or air conditioner is displayed. Specifically, various operation items such as remote control switching-on "TV" for a television receiver, channel selection "CH" and volume selection "VOL" of a television receiver, remote control switching-on "VTR" for a VTR recorder, and channel selection "CH" and operation selection "CONT" for a VTR recorder are displayed.

Additionally, as an air conditioner operating menu, although not shown in Fig. 18, remote control switching on "AIRCON" of the air conditioner, or the air conditioner operation selections of cooling "CL," warming "WA," and drying "DY" may be displayed.

The remote control program 201 is arranged such that in this display concerning an air conditioner, by shifting the display screen upward by the operation of depressing the uppermost stage 121U of the operating elements 121 of the portable electronic device 100, for example, the items of "AIRCON, CL, WA, DY" concerning the operation of the air conditioner can be displayed on the display part 130

When the air-conditioner operation menu is displayed by shift of the display screen, the operating menu of "TV, CH, VOL" of the television receiver "TV" that was shifted to an upper part of the display screen is removed form the display screen. However, it can be displayed again on the display unit 130 by depressing the lowermost stage 121D of the operating elements121. The program 201 is thus set.

Thus, although depending upon the capacity of the nonvolatile memory 46 of the portable electronic device 100, several types of operating menus to be performed by remote control operation besides those for a television receiver, VTR recorder, or air conditioner can be stored, and their operating menus can be displayed by shift operation using the operating elements 121U and 121D.

The remote control operation of the television receiver will be now described. When remote control operation of a television receiver is performed, for example, by moving a cursor under the "TV" display inside the display part 130 in Fig. 18 for selection, and setting "TV" in the operating element 122 of the confirmation key, commands are transmitted from the window part 140 by infrared rays and then power to the television receiver can be switched on. In this case, when the operating element 122 is depressed in this case, naturally it is necessary for the window part 140 to which the command is transmitted by infrared rays to be facing the television receiver.

After power to the television receiver has been switched on, channel selection can be performed by switching the cursor to below the "CH" display. When the channel selection is set by pressing the operating element 122, a display of "+" or "-" appears in the display part 130 after the channel is selected by pressing the operating element 122.

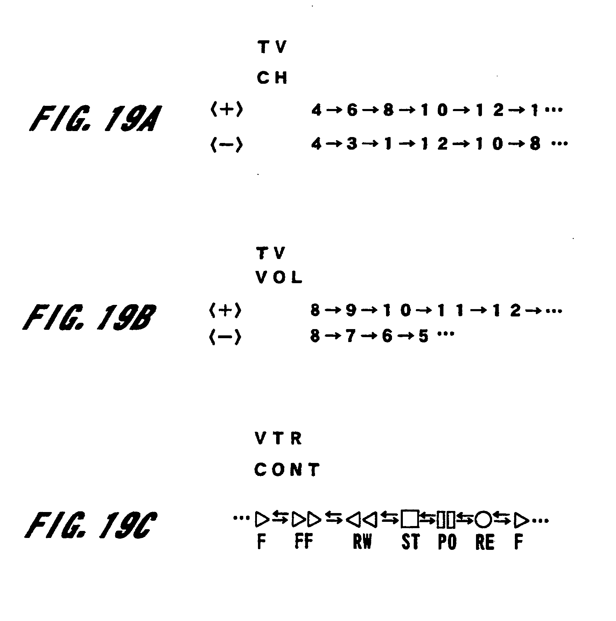

As shown in Fig. 19A, by depressing the operating element 121R during display of "+", the channel number of the television receiver can be switched by transmitting from the window part 141 the infrared command to switch the channel number of the television receiver in the increasing direction. On the other hand, by depressing the operating element 121L during display of "-", the channel number of the television receiver can be switched by transmitting from the window part 141 the infrared command to switch the channel number of the television receiver in the decreasing direction.

The program is arranged such that by depressing the operating element 121L while "-" is displayed on the display part 130, the display is changed to "-" and that by depressing the operating element 121L while "+" is displayed on the display part 130, the display is changed to "-".

Then, the channel selection operation is finished by depressing the operating element 122, thereby returning the display on the display part 130 to the initial screen.

The volume selection operation menu item "VOL" is displayed at the side of the channel selection item "CH". By moving the cursor to this volume selection menu item "VOL" for selection to then select it by depressing the operating element 122, a display of "+" or "-" appears in the display part 130 in the same way as in channel selection described above.

As shown in Fig. 19B, by depressing the operating element 121R during display of "+", the volume of the television receiver can be switched by transmitting from the window part 141 the infrared command to change the volume of the television receiver in the increasing direction. On the other hand, by depressing the operating element 121 L during display of "-", the volume of the television receiver can be switched by transmitting from the window part 141 the infrared command change the volume of the television receiver in the decreasing direction.

The program is arranged such that by depressing the operating element 121L while "-" is displayed on the display part 130, the display is changed to "-" and that by depressing the operating element 121L while "+" is displayed on the display part 130, the display is changed to "-".

Then, the channel selection operation is finished by depressing the operating element 122, thereby returning the display on the display part 130 to the initial screen.

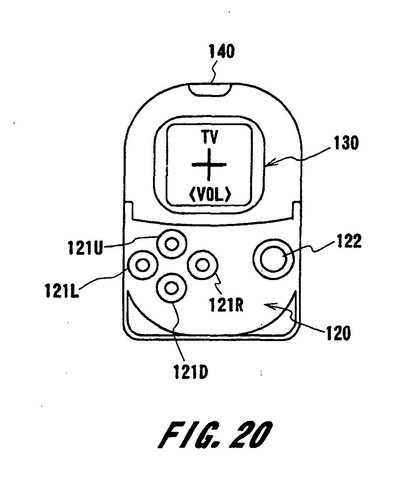

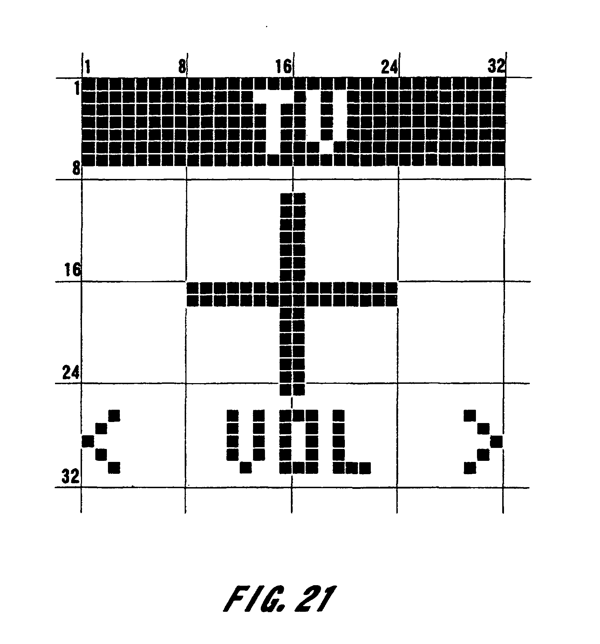

Fig. 20 shows a state that "+" is displayed on the display part 130 upon the operation of the volume selection. Fig. 21 shows an enlarged image display thereof. Here, for example, the numbers 1, 8, 16, 24, and 32 in the vertical and horizontal directions in the display shown in Fig. 21 indicate pixel numbers of the liquid crystal display, and indirectly represent the size of the screen of the liquid crystal display.

In each of operations such as energizing, channel selection, and volume selection in the aforesaid television receiver, while energizing is selected, for example, by setting the cursor on "TV" by means of the operating element 122, "+" and "-" display can be made together with the energizing by moving the cursor to the channel "CH" or volume "VOL" display. The setting confirmation and screen return operations can be performed merely by depressing operating element 121U, 121D, 121R, or 121L without moving the cursor.

For example, "+" and "-" in the next hierarchy may be displayed by confirmation by depressing the operating element 122 after moving the cursor by the depression of operating elements 121U, 121D, 121R, and 121L. The screen may be returned to the initial screen by depressing operating element 121U or 121D. Thus, there can optionally be changed an arrangement of the operation order determined by the remote control program. This can also be said with regard to the remote control operation of a VTR recorder and the remote control operation of an air conditioner which will be described later on.

Next, returning to Fig. 18, the remote control operation of a VTR will be described.

By moving, for selection, the cursor to the "VTR" display in the initial screen by the operation of operating elements 121U, 121D, 121R, and 121L and depressing the operating element 122 for determination, the command is transmitted from the window part 140 by infrared rays and then the power of the VTR is switched on.

Then, by moving the cursor to the channel display "CH" in the initial screen to set the operation menu item to the channel selection by depressing the operating element 122, the screen is switched to the same display of "+" or "-" in the same way as with the channel display "CH" of the television receiver described above.

While "+" is displayed on the display part 130, the channel number is changed in the increasing order by depressing the operating element 121R. While "-" is displayed on the display part 130, the channel number is changed in the decreasing order by depressing the operating element 121L.

Then, the channel selection operation is finished by depressing the operating element 122, thereby returning the display on the display part 130 to the initial screen.

In the remote control operation of the VTR, when the cursor is moved to the "CONT" display of the initial screen and the operating element 122 is depressed for determination, any one of the characters respectively indicating playback F, fast forward FF, rewind RW, stop ST, pause PO and recording Re as shown in Fig. 19C is displayed on the display part 130.

Specifically, this character display is moved in the right-hand direction in Fig. 19C by depressing the operating element 122R, i.e., the display is switched in the order of F → FF → RW → ST → PO → RE, and the display is moved in the left-hand direction in Fig. 19C by depressing the operating element 122L, i.e., the display is switched in the order of F → RE → PO → ST → RW → FF → F.

Then, by depressing the operating element 122 in the desired operating mode, that operating mode is established, and the screen display returns to the initial screen.

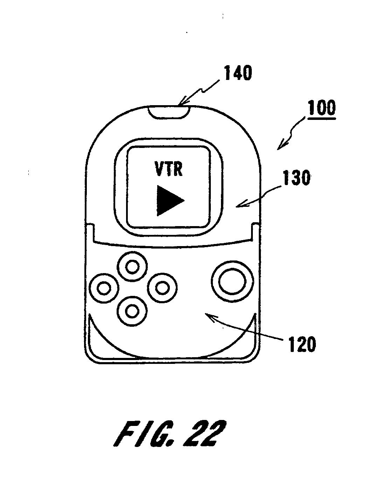

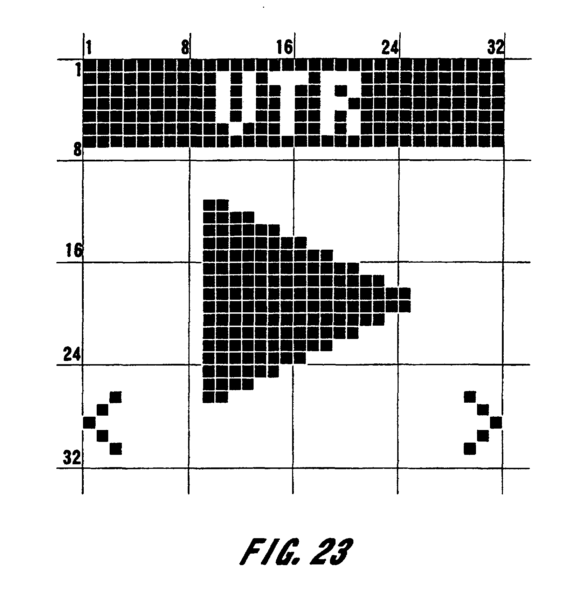

Fig. 22 shows a state that in the remote control operation of a VTR, the character display of playback "F" is displayed on the display part 130. Fig. 23 shows an enlarged view of the displayed image. Here, for example, the numbers 1, 8, 16, 24, and 32 in the vertical and horizontal directions in the display shown in Fig. 21 indicate pixel numbers of the liquid crystal display, and indirectly represent the size of the screen of the liquid crystal display.

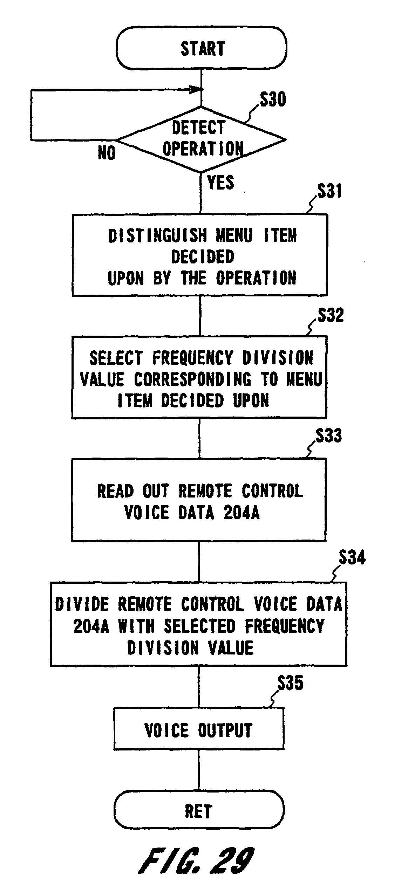

Fig. 29 shows displayed contents which concern the remote control operation display of an air conditioner and are sorted into hierarchies.

Specifically, the upper-level display hierarchy 501 is the initial screen in which there are displayed the remote control switching on "AIRCON" of the air conditioner and the air conditioner operation selections of cooling "CL," warming "WA," and drying "DY" may be displayed.

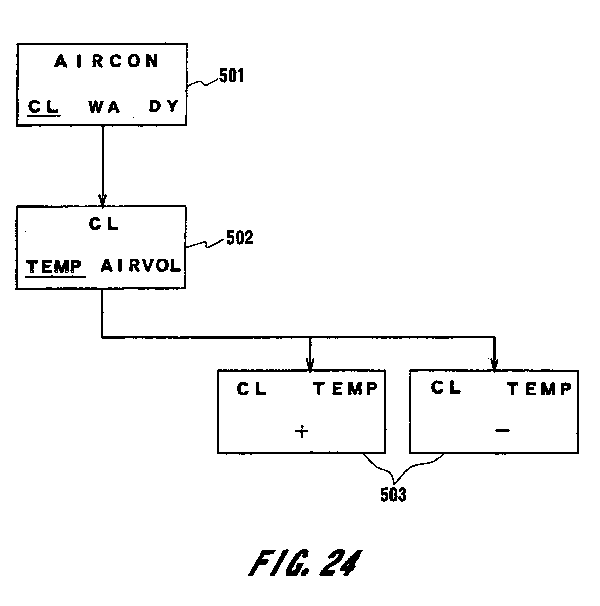

The middle-level display hierarchy 502 shows the displayed screen when any one of the air conditioner operation selections of cooling "CL," warming "WA," and drying "DY" is selected and determined. In the display hierarchy 502, the operation menu items which are more specific operations of the selected and determined operation. If the cooling "CL" display is set in the initial screen, then, as shown in Fig. 24, the "TEMP" display indicative of the temperature selection and the "AIRVOL" display indicative of selection of blow volume are displayed on the display part 130.

In this lower-level display hierarchy 503 the characters used for performing the operation selected and determined in the middle-level display hierarchy 502 are displayed. In the display thereof, "+" display or "-" display is performed in the same manner as in the television receiver and the VTR.

In the remote control operation of the air conditioner, by moving, by means of an operating element 121U, 121D, 121R or 121L, the cursor to the "AIRCON" display in the initial screen displayed in the display part 30 shown in Fig. 18 for selection and then depressing the operating element 122 for determination, the command is transmitted through the window part 140 by infrared rays and hence the power to the air conditioner is switched on.

By moving the cursor to the "CL" display displayed in the initial screen of the upper-level display hierarchy 501 to depress the operating element 122 for determination of the operation menu item, the screen is changed to the middle-level display hierarchy 502. Then, in the display hierarchy 502, by moving the cursor to the "TEMP" display indicative of the temperature election or the "AIRVOL" display indicative of the blow amount to determine the operation menu item by means of press of the operating element 122, the screen is switched to the "+" display or "-" display in the lower-level display hierarchy 503..

While "+" is displayed, the temperature or the blow volume can be changed in the increasing direction by pressing the operating element 121R. While "-" is displayed, the temperature or the blow volume can be changed in the decreasing direction by pressing the operating element 121L. Then, the channel selection operation is finished by depressing the operating element 122, thereby returning the display on the display part 130 to the upper-level display hierarchy which is the initial screen.

The operation menu items concerning the remote control operation of a television receiver, remote control operation of the VTR, and remote control operation of an air conditioner have been described with mainly referring to the display screen displayed on the display part 130.

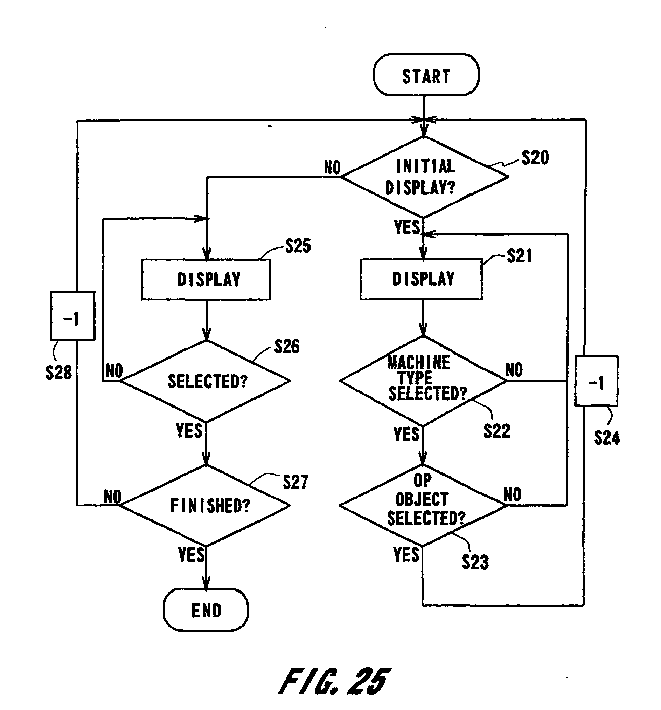

Fig. 25 is a flowchart for controlling the processing for displaying the operation menu item concerning these remote control operations on the display part 130.

By initiating the program routine, first determination of whether or not the initial screen is displayed is made in step 20, and when operation has not yet been performed, the initial screen (shown in Fig. 18) is displayed (step ST21).

Next, moving to the next evaluation block ST22, it is determined whether or not the machine to be controlled has been selected. Specifically, in the example given above, it is determined whether the remote control display "TV" for the television receiver, the remote control display (VTR) of a VTR, or the remote control display "AIRCON" of the air conditioner has been selected, and if none has been selected, display remains in the initial screen.

When one of the machine to be controlled has been selected by moving the cursor, in the next step ST23, it is determined whether the operation object (OP object) has been selected. Specifically, it is determined whether "CH" display or "VOL" display has been selected in remote control display of the television receiver, whether "CH" display or "CONT" display has been selected in the remote control display of the VTR recorder, or whether "CL," "WA," or "DY" display has been selected in the remote control display of the air conditioner. In this step ST23, if it is found that selection has not been made, the initial screen remains, and if selection has been made, the process advances to step ST24.

In this step ST24, "-1" is displayed; this "-1" designates the layer immediately below in the hierarchical display and here indicates moving to the display in the layer immediately below the initial screen. In other words, in the television receiver, this indicates the "+" and "-" display, which is the display in the layer immediately below "CH" and "VOL" display, in a VTR recorder it indicates the "+" or "-" the display or the F, FF, RW, ST, RE, PO, etc., character display, which is the display in the layer immediately below "CU" and "CONT", and in the air conditioner, it indicates the display of the middle level shown in Fig. 24.

After processing in step ST24, the process flow again returns to step ST20, and it is determined whether or not the initial screen is displayed. Here, since the designation of lower-layer display has been designated in step ST24, determination in step ST24 is "NO," and the process moves to the display in step ST25.

In step ST25, the lower-layer display designated as described above in step 204 is performed. In other words, the "+" and "-" display or character display is performed in the television receiver, and in the air conditioner, for example, the display of the middle row in Figure 24 is performed.

Next, in step ST26, it is determined whether or not selection has been made with regard to the item displayed in step S25; when such selection has not been made, the process remains in the display screen of step ST25, and when selection has been made, the process flow moves to the evaluation block for completion or noncompletion. In this evaluation block ST27, for example, return to the initial screen in accordance with the operating element 122 as described above is made a trigger, and when display exists as far as a third hierarchy as shown in the bottom row in Fig. 24, selection is not yet completed.

In this case, the process advances to step ST28, and designation of the lower-level display hierarchy shown in Fig. 24, i.e., "+" display or "-" display, is performed. In this case, the flow returns to step ST20, and in step ST05, the "+" display or "-" display is performed. Then, when the hierarchical displays are finally exhausted, step ST27 is completed, and program reaches END.

Next, the new auxiliary operation function of the remote control unit which functions by voice, as provided on the portable electronic device 100 of this embodiment, will be described.

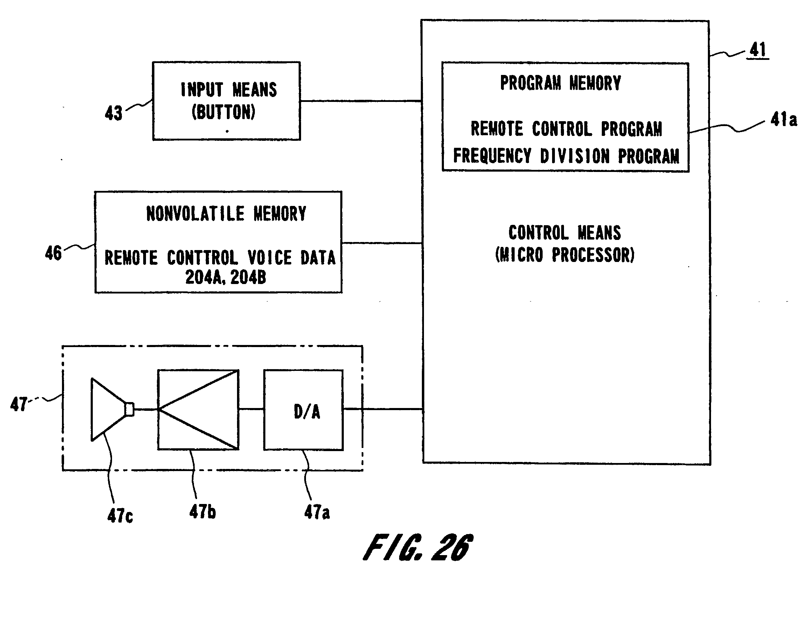

Fig. 26 is a block diagram showing the constituent elements used for auxiliary operation functions of a remote control unit by voice, removed from the constituent elements of the portable electronic device shown in Figs. 11.A and 11B.

Here, the sound generating unit 47 shown in Fig. 11A as shown in detail in Fig. 26, includes a digital/analog converter 47a, a voice amplifier 47b, and a speaker 47c.

In this embodiment, the ancillary operation function of the voice remote control unit may be, for example, a menu item sound generating function which, when an operation menu item has been selected and decided upon as described above, allows the operator to recognize the decided-upon item by voice, and a channel selection sound generating function, which allows the operator to recognize aurally channel numbers that have been selected and decided upon in the channel selection "CH" operation of a television receiver among the operation menu items.

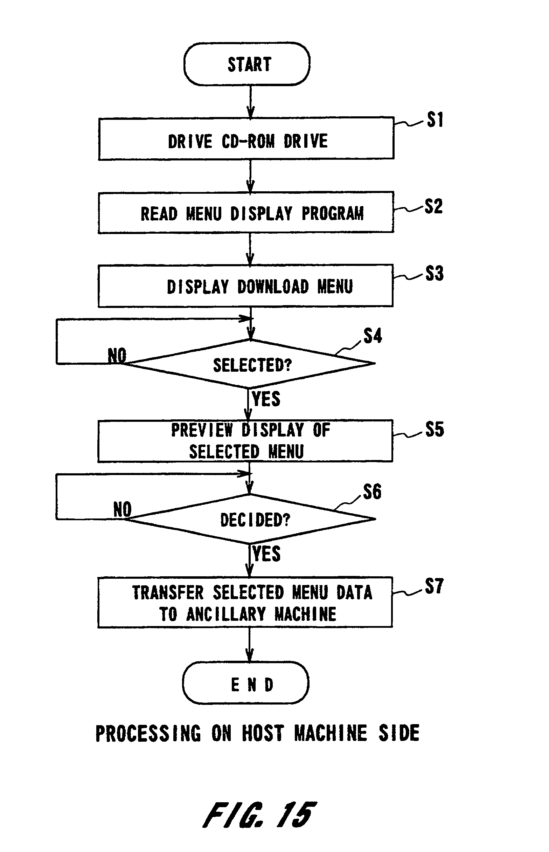

As shown in Fig. 14B, the remote control program 201, frequency division program 202, and remote control voice data 204 are recorded on the CD-ROM 200 which is the recording medium. This recorded data is downloaded to the portable electronic device 100 in the sequence shown in Fig. 15, and as shown in Fig. 26, the remote control program 201 and frequency division program 202 are read into the program memory 41a of the control unit 41, and remote control voice data is read into the nonvolatile memory 46.

Here, remote control voice data includes two types of voice data, remote control voice data 204A, which is used in the menu item sound generation function, and remote control voice data 204B, which is used in the channel selection sound generating function, and both are read into the nonvolatile memory 46.

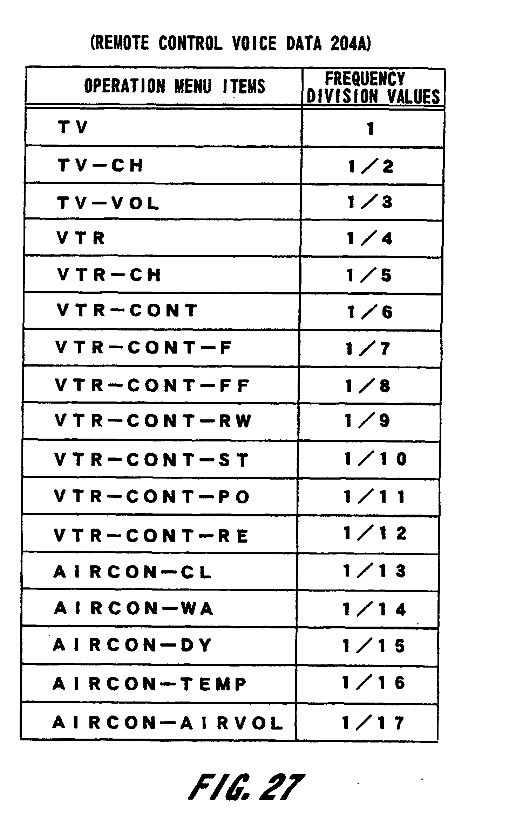

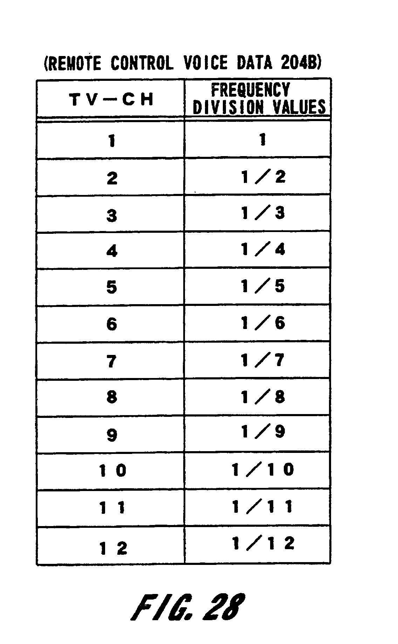

In the frequency division program 202, as shown in Fig. 27, frequency division values for voice data corresponding to the aforesaid operation menu items and, as shown in Fig. 28, frequency division values of voice data corresponding to the channel numbers of the television receiver, are set in advance. The frequency division program 202 is constituted so that remote control voice data 204A or 204B is divided and outputted to the sound generating unit 47 based on these frequency division values.

Fig. 29 shows a flowchart of control for the control unit in carrying out the aforesaid menu item sound generation function.

Specifically, when an operation menu item is selected and decided upon by depressing operating elements 121 and/or 122, the control unit 41 detects this operational information that has been input via the input means 43 (step S30), in the following step S31, the operation menu item decided upon by this operation is distinguished, and the process then advances to step S32.

In step S32, the frequency division value corresponding to the operation menu item decided upon is selected. For example, as shown in Fig. 27, if the selected operation menu item is the television receiver "TV" in the menu of the initial screen, then the frequency division value of "1" is selected, and if the operation is channel selection in the television receiver in the lower-layer menu, then the frequency division value of "1/2" is selected.

Similarly, if the decided-upon operation menu item is another item, based on the corresponding relation shown in Fig. 27, the specified frequency division value is selected in step S32.

Next, in step S33, the remote control voice data 204A assigned to the menu item sound generating function is read from the nonvolatile memory 46. Then, in step S34, the remote control voice data 204A is divided based on the previously selected frequency division value, and is changed to voice data unique to the operation menu item that has been decided upon.

The voice data obtained by frequency division then is output to the sound generating unit 47 (step S35), and the routine relating to this menu item sound generating function is ended.

In the sound generating unit 47, the digital/analog converter 47a first converts the frequency-divided voice data (digital data) into an analog voice signal and sends it to the voice amplifier 47b, where it is amplified to a specified volume and is output to the speaker 47c. By this means, an independent voice corresponding to the decided-upon operation menu item is produced by the speaker 47c.

In this way, the remote control voice data 204A and 204B each have specified frequencies. By dividing this voice data by a frequency division value corresponding to the channel number, voices having frequencies determined by the voice data frequency and the frequency division value corresponding to the channel number can be assigned to each channel number. Ultimately, each channel has voice data having a different frequency, in other words, voice data having a high or low tone.

Accordingly, as explained above, even if it is not possible to read the operation menu item displayed on the display screen 130, by aurally distinguishing the voice produced by the speaker 47c during remote control operation, selected and decided-upon operation menu items can be recognized.

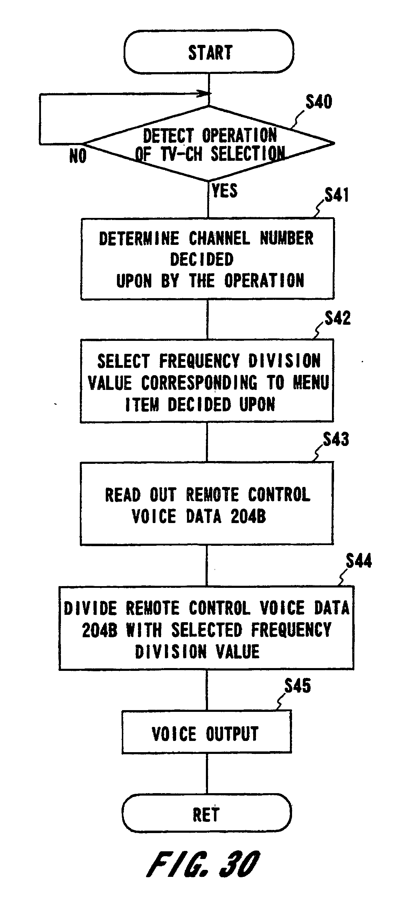

Next, Fig. 30 is a control flowchart showing the control unit carrying out the aforesaid selected channel sound generating function.

After the channel selection "CH" which is the lower-layer menu item of the television receiver "TV" in the operation menu items has been selected and decided upon, the channel number of the television receiver as described above can be switched sequentially in the upward direction or downward direction by operation of the operating element 121.

The channel number selected by this channel selection operation is also difficult to distinguish for visually impaired persons.

Accordingly, after the item "TV-CH" relating to channel selection in the television receiver has been selected and decided upon, the subroutine relating to the selected channel sound generating function shown in Fig. 30 is carried out.

Specifically, when the channel number of the television receiver has been selected and decided upon by pressing the operating element 121, the control unit 41 detects this operation information that has been input via the input unit 43 (step S40), and next, in step S41, the channel number decided upon by this operation is determined, and the process advances to step S42.

In step S42, a frequency division value corresponding to the channel number that has been decided upon is selected. For example, as shown in Fig. 28, if the channel number decided upon is channel 1, then the frequency division value "1" is selected, and if it is channel 3, then the frequency division value "1/3" is selected.

Similarly, if the decided-upon channel number is a separate item, based on the corresponding relation shown in Fig. 28, a specified frequency division value is selected in step S42.

Next, in step S43, the remote control voice data 204B assigned to the selected channel sound generating function is read from the nonvolatile memory 46. Then, in step S44, the remote control voice data 204B is divided based on the frequency division value previously selected, and is changed to voice data unique to the selected channel number.

Then, the voice data obtained by frequency division is outputted to the sound generating means 47 (step S45), and the routine relating to this selected channel sound generating function is ended.

In the sound generating means 47, the digital/analog converter 47a first converts the frequency-divided voice data (digital data) into an analog voice signal and sends it to the voice amplifier 47b, where it is amplified to a specified volume and outputted to the speaker 47c. By this means, a voice unique to the selected channel number is produced by the speaker 47c.

Accordingly, as described above, even if the operation menu items displayed on the display screen 130 cannot be read, the selected and decided-upon channel number of the television receiver can be distinguished aurally by the voice generated from the speaker 47c during remote control operation.

In the menu item sound generating function and selected channel sound generating function described above, one set of remote control voice data was used for each function, and by dividing the remote control voice data in accordance with the frequency division program 202, it was possible to generate a voice unique to multiple operation menu items or television channel numbers.

By using the frequency division program 202 in this way, the volume of remote control voice data required for these functions can be reduced. This can greatly contribute to the saving of limited memory capacity in the non-volatile memory 46.

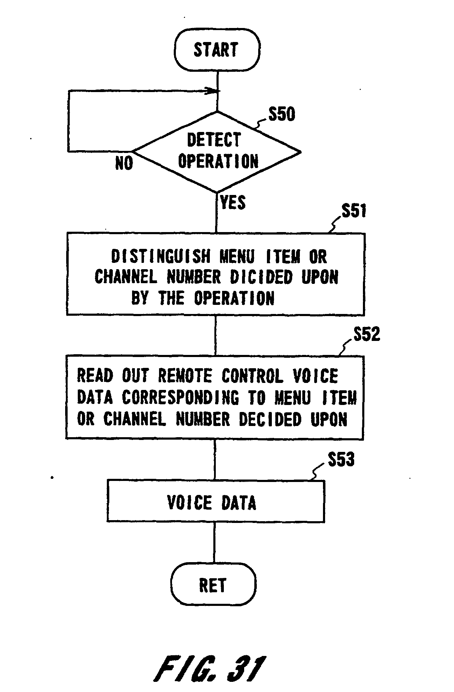

Fig. 31 is a flowchart showing an example in which a menu item sound generation function and a channel selection sound generation function are realized by a different configuration.

Specifically, in this example, rather than using the frequency division program 202 as described above, remote control voice data in a number corresponding to the operation menu items and television receiver channel numbers that can be selected is recorded in a recording medium, i.e., the CD-ROM 200.

This remote control voice data is downloaded to the portable electronic device 100 and read into the non-volatile memory in the order shown in Fig. 15. Thus, this configuration example can be realized based on the premise that the non-volatile memory 46 is provided with a sufficiently large memory capacity.

Referring to Fig. 31, the control flow of the menu item sound generating function and the selected channel sound generating function according to this configuration example is described.

When an operation menu item or television receiver channel number is selected and decided upon by pressing an operating element 121 and/or 122, the control means 41 detects the operation information thereof that has been input via the input means 43 (step S50), and next, in step S51, the operation menu item or television receiver channel number that has been decided upon by this operation is distinguished, and the routine advances to step S52.

In step S52, remote control voice data corresponding to the decided-upon operation menu item or television receiver channel number is read from the nonvolatile memory 46. Then, in step S53, remote control voice data is output to the sound generating unit 47, and the routine relating to this menu item sound generating function or selected channel sound generating function is ended.

In the sound generating unit 47, the digital/analog converter 47a first converts the frequency-divided voice data (digital data) into an analog voice signal and sends it to the voice amplifier 47b, where it is amplified to a specified volume and output to the speaker 47c. By this, a voice unique to the selected channel number is produced by the speaker 47c.

The menu item sound generating function and selected channel sound generating function described above particularly involve the desire of the inventors that the portable electronic device 100 of this embodiment be used effectively by persons having visual impairments and, it is hoped, will contribute considerable benefit to society.

The present invention is not limited to the embodiments described above.

For example, in the embodiments described above, television receivers, VTR recorders, and air conditioners were cited and discussed as examples of objects of control by means of the portable electronic device that has been made to function as a remote control unit, but in addition to these devices, the present invention may be constituted so as to use various other products that can be operated by remote control, such as electric fans, radios, sound equipment, blinds, shutters, etc., as objects to be controlled.

Furthermore, in the above-described embodiment which uses the frequency division program 202, two types of voice data, remote control voice data 204A, which is used in the menu item sound generation function, and remote control voice data 204B, which is used in the channel selection sound generating function, are recorded in the nonvolatile memory 46. However, various functions can be realized by setting frequency division values corresponding to the number of operation menu items or television receiver channel selection operations in the frequency division program 202, by frequency division of one type of remote control voice data.

Moreover, in the embodiments described above, in the operation menu item or television receiver channel selection operation, which are added to the portable electronic device as remote control functions, it was possible to recognize operation contents aurally, but in addition, for example, constitutions are possible which allow a desired operation such as a VTR recorder channel selection operation, air conditioner temperature selection operation, air flow amount selection operation, etc., to be recognized aurally by the operator.

Additionally, in cases where multiple remote control operated items are the objects of control, it is possible to recognize operation contents aurally with regard to only the desired operation item among these items. For example, by limitation to the channel selection operations of the television receiver in the embodiments described above, the operation contents can be recognized aurally.

As explained above, by means of the present invention, since it is possible to use a portable electronic device that can be connected to a host machine and also used as an ancillary machine, as a remote control device, the applications of this device are broadened, and a wide range of demands can be met.

Furthermore, due to the present invention, since information relating to remote control operation can be distinguished aurally even by users who are visually impaired, a wide range of demands is satisfied and the invention contributes to social welfare.

## Claims

1. A portable electronic device having a program execution function and which can be connected to a host machine, and which has input/output and calculation functions independent from the host machine, comprising:
a memory means (46,41a) which stores recording data containing remote control voice data and a remote control program transmitted from a recording medium of the host machine;
a control means (41) which controls execution of the remote control program stored in said memory means;
an operation input means (43) for operating said control means; and
a sound generating means (47) which generates sounds based on the remote control voice data, wherein
said control means (41) changes or selects and outputs to said sound generating means (47), remote control voice data in accordance with operation of said operation input means (43), based on the remote control program.

2. The portable electronic device according to claim 1, wherein
the remote control program includes a frequency division program which divides remote control voice data, and wherein
said control means, along with detecting operation of said operation input means based on the remote control program, divides remote control voice data in accordance with a frequency division value corresponding to the operation detected and outputs said data to said sound generating means.

3. The portable electronic device according to claim 1, wherein
multiple voice data segments each corresponding to at least operations of said operation input means are included in the remote control voice data, and
said control means, based on the remote control program, along with detecting the operation of said operation input means, selects and outputs to the sound generating means, remote control voice data corresponding to the operation detected.

4. The portable electronic device according to claim 1, wherein
said remote control program stored in said memory means is executed in a state of disconnection from the host machine.

5. The portable electronic device according to claim 1, wherein
the host machine when connected to the portable electronic device is a video game unit, and the remote control program is downloaded to said memory means from the connected host machine, and is executed by said control means.

6. The portable electronic device according to claim 1, wherein
the remote control program is additionally recorded on a recording medium which stores game software and is loaded into the host machine.

7. A control method for a portable electronic device which can be connected to a host machine having program executing functions, and which has input/output and operation functions independent of the host machine,
comprising the steps of storing recording data, including a remote control program and remote control voice data transferred from the recording medium of a host machine, in the portable electronic device, and
based on the remote control program, outputting remote control voice data according to an operation by a user.

8. The control method for the portable electronic device described in claim 7, wherein
said operation performed by the user is detected based on the remote control program, and remote control voice data is frequency-divided according to a frequency division value corresponding to a detected operation and is outputted.

9. The control method for the portable electronic device described in claim 7, wherein
multiple segments of voice data corresponding to at least user operations are included in remote control voice data, and
a user operation is detected based on said remote control program, and remote control voice data corresponding to the operation detected is selected and outputted.

10. A recording medium to be loaded into a host machine which has a program executing function and which records data to be transferred to a portable electronic device connected to the host machine, comprising in recorded data thereof:
a remote control program to be executed by the portable electronic device, and
remote control voice data to be outputted based on the remote control program.

11. The recording medium according to claim 10, which records data used in a portable electronic device, wherein
said remote control program includes a remote control program of a control object device whereby, along with detecting a user operation, the remote control voice data is changed or selected and outputted corresponding to the detected operation.

12. The recording medium according to claim 11, which records data used in a portable electronic device, wherein
the remote control program, along with detecting the user operation, divides remote control voice data by a frequency division value corresponding to the detected operation and outputs said data from a sound generating means of the portable electronic device.

13. The recording medium according to claim 11, which records data used in a portable electronic device, wherein
multiple segments of voice data corresponding at least to user operations are included in the remote control voice data, and
the remote control program has a function which, along with detecting user operations, selects and outputs remote control voice data corresponding to the operation detected.

## Patentansprüche

1. Tragbares elektronisches Gerät mit einer Programmausführungsfunktion und welches mit einer Wirtsmaschine verbunden werden kann, und welches Eingabe/Ausgabe- und Berechnungsfunktionen unabhängig von der Wirtsmaschine aufweist, welches umfasst:
ein Speichermittel (46, 41a), welches Fernsteuerungsstimmdaten enthaltende Aufzeichnungsdaten und ein von einem Aufzeichnungsmedium der Wirtsmaschine übertragenes Fernsteuerungsprogramm speichert,
ein Kontrollmittel (41), welches die Ausführung des in dem Speichermittel gespeicherten Fernsteuerungsprogramms kontrolliert;
ein Betätigungseingabemittel (43) zum Betätigen der Kontrollmittel; und
ein Tonerzeugungsmittel (47), welches basierend auf den Fernsteuerungsstimmdaten Töne erzeugt, wobei
das Kontrollmittel (41), basierend auf dem Fernsteuerungsprogramm, Fernsteuerungstimmdaten entsprechend einer Betätigung des Betätigungseingabemittels (43) ändert oder auswählt und an das Tonerzeugungsmittel (47 ausgibt.

2. Tragbares elektronisches Gerät nach Anspruch 1, bei welchem
das Fernsteuerungsprogramm ein Fernsteuerungsstimmdaten teilendes Frequenzteilungsprogramm umfasst, und bei welchem
das Kontrollmittel, zusammen mit einem Erfassen der Betätigung des Betätigungseingabemittels, basierend auf dem Fernsteuerungsprogramm, Fernsteuerungskontrollstimmdaten entsprechend einem der erfassten Betätigung entsprechenden Frequenzteilungswert teilt und die Daten an das Tonerzeugungsmittel ausgibt.

3. Tragbares elektronisches Gerät nach Anspruch 1, bei welchem
mehrere Stimmdatensegmente, von denen jedes wenigstens Betätigungen des Betätigungseingabemittels entspricht, in den Fernsteuerungsstimmdaten enthalten sind,und
das Kontrollmittel, basierend auf dem Fernsteuerungsprogramm, zusammen mit einem Erfassen der Betätigung des Betätigungseingabemittels der erfassten Betätigung entsprechende Fernsteuerungsstimmdaten auswählt und an das Tonerzeugungsmittel ausgibt.

4. Tragbares elektronisches Gerät nach Anspruch 1, bei welchem das in dem Speichermittel gespeicherte Fernsteuerungsprogramm in einem Zustand der Trennung von der Wirtsmaschine ausgeführt wird.

5. Tragbares elektronisches Gerät nach Anspruch 1, bei welchem die Wirtsmaschine, wenn sie mit dem tragbaren elektronischen Gerät verbunden ist, eine Videospieleinheit ist, und das Fernsteuerungsprogramm von der angeschlossenen Wirtsmaschine in das Speichermittel geladen wird, und durch das Kontrollmittel ausgeführt wird.

6. Tragbares elektronisches Gerät nach Anspruch 1, bei welchem das Fernsteuerungsprogramm auf einem Aufzeichnungsmedium, welches Spielsoftware speichert und in die Wirtsmaschine geladen ist, zusätzlich gespeichert ist.

7. Kontrollverfahren für ein tragbares elektronisches Gerät, welches mit einer Wirtsmaschine verbunden werden kann und Programmausführungsfunktionen aufweist, und welches Eingabe/Ausgabe- und Betätigungsfunktionen unabhängig von der Wirtsmaschine aufweist,
welches die Schritte Speichern von Aufzeichnungsdaten, einschließlich eines Fernsteuerungsprogramms und von dem Aufzeichnungsmedium einer Wirtsmaschine übertragenen Fernsteuerungsdaten, in dem tragbaren elektronischen Gerät, und
basierend auf dem Fernsteuerungsprogramm, Ausgeben von Fernsteuerungsstimmdaten gemäß einer Betätigung durch einen Nutzer, umfasst.

8. Kontrollverfahren für das tragbare elektronische Gerät nach Anspruch 7, bei welchem
die durch den Nutzer durchgeführte Betätigung, basierend auf dem Fernsteuerungsprogramm, erfasst wird, und die Fernsteuerungsstimmdaten gemäß einem einer erfassten Betätigung entsprechenden Frequenzteilungswert frequenzgeteilt und ausgegeben werden.

9. Kontrollverfahren für das tragbare elektronische Gerät nach Anspruch 7, bei welchem
mehrere Segmente von Stimmdaten, welche wenigstens Nutzerbetätigungen entsprechen, in den Fernsteuerungsstimmdaten enthalten sind, und
eine Nutzerbetätigung, basierend auf dem Fernsteuerungsprogramm, erfasst wird, und der erfassten Betätigung entsprechende Fernsteuerungsstimmdaten ausgewählt und ausgegeben werden.

10. Aufzeichnungsmedium, welches in eine Wirtsmaschine geladen werden soll, welche eine Programmausführungsfunktion aufweist, und welche Daten aufzeichnet, die an ein mit der Wirtsmaschine verbundenes tragbares elektronisches Gerät übertragen werden sollen, welches in dessen aufgezeichneten Daten umfasst:
ein Fernsteuerungsprogramm, das von dem tragbaren elektronischen Gerät ausgeführt werden soll, und
Fernsteuerungsstimmdaten, die basierend auf dem Fernsteuerungsprogramm ausgegeben werden sollen.

11. Aufzeichnungsmedium nach Anspruch 10, welches Daten, die in einem tragbaren elektronischen Gerät verwendet werden, aufzeichnet, bei welchem
das Fernsteuerungsprogramm ein Fernsteuerungsprogramm eines Kontrollobjektgeräts enthält, wobei, zusammen mit dem Erfassen einer Nutzerbetätigung die der erfassten Betätigung entsprechenden Fernsteuerungsstimmdaten geändert oder ausgewählt und ausgegeben werden.

12. Aufzeichnungsmedium nach Anspruch 11, welches Daten, die in einem tragbaren elektronischen Gerät verwendet werden, aufzeichnet, bei welchem
das Fernsteuerungsprogramm, zusammen mit dem Erfassen der Nutzerbetätigung, die Fernsteuerungsstimmdaten entsprechend der erfassten Betätigung durch einen Frequenzteilungswert teilt, und die Daten an ein Tonerzeugungsmittel des tragbaren elektronischen Geräts ausgibt.

13. Aufzeichnungsmedium nach Anspruch 11, welches Daten, die in einem tragbaren elektronischen Gerät verwendet werden, aufzeichnet, bei welchem
mehrere Segmente von Stimmdaten, die wenigstens Nutzerbetätigungen entsprechen, in den Fernsteuerungsstimmdaten enthalten sind, und
das Fernsteuerungsprogramm eine Funktion hat, welche, zusammen mit dem Erfassen von Nutzerbetätigungen, Fernsteuerungsstimmdaten, entsprechend der erfassten Betätigung auswählt und ausgibt.

## Revendications

1. Dispositif électronique portable comportant une fonction d'exécution de programme et qui peut être connecté à une machine centrale et qui comporte des fonctions d'entrée/sortie et de calcul indépendantes de la machine centrale, comprenant :
des moyens de mémoire (46,41a) qui mémorisent les données d'enregistrement contenant des données vocales de télécommande et un programme de télécommande transmis par un support d'enregistrement de la machine centrale;
des moyens de commande (41) qui commandent l'exécution du programme de télécommande mémorisé dans lesdits moyens de mémoire;
des moyens (43) d'entrée d'opération pour faire fonctionner lesdits moyens de commande; et
des moyens (47) de production de sons qui produisent des sons sur la base des données vocales de télécommande, et dans lequel
lesdits moyens de commande (41) modifient ou sélectionnent et délivrent auxdits moyens (47) de production de sons, des données vocales de télécommande en fonction du fonctionnement desdits moyens d'entrée sur la base du programme de télécommande.

2. Dispositif électronique portable selon la revendication 1, dans lequel le programme de télécommande inclut un programme de division de fréquence qui divise les données vocales de télécommande, et dans lequel
lesdits moyens de commande divisent, conjointement avec la détection du fonctionnement desdits moyens d'entrée d'opération sur la base du programme de télécommande, des données vocales de télécommande en fonction d'une valeur de division de fréquence conformément à l'opération détectée et délivrent lesdites données auxdits moyens de production de sons.

3. Dispositif électronique portable selon la revendication 1, dans lequel de multiples segments de données vocales correspondant chacun à au moins des opérations desdits moyens d'entrée d'opérations sont inclus dans les données vocales de télécommande, et
sur la base des programmes de télécommande et conjointement avec la détection de l'opération desdits moyens d'entrée d'opérations, lesdits moyens de commande sélectionnent et délivrent les données vocales de télécommande correspondant à l'opération détectée, aux moyens de production de sortie.

4. Dispositif électronique portable selon la revendication 1, dans lequel
ledit programme de télécommande mémorisé dans lesdits moyens de mémoire est exécuté dans un état de déconnexion par rapport à la machine centrale.

5. Dispositif électronique portable selon la revendication 1, dans lequel
lorsqu'elle est connectée au dispositif électronique portable, la machine centrale est une unité de jeu vidéo et le programme de télécommande est téléchargé dans lesdits moyens de mémoire à partir de la machine centrale connectée, et est exécuté par lesdits moyens de commande.

6. Dispositif électronique portable selon la revendication 1, dans lequel
le programme de télécommande est enregistré de façon additionnelle sur un support d'enregistrement qui mémorise un logiciel de jeu et est chargé dans la machine centrale.

7. Procédé de commande pour un dispositif électronique portable, qui peut être connecté à une machine centrale possédant des fonctions d'exécution de programme et qui possède des fonctions d'entrée/sortie et d'opération indépendantes de la machine centrale,
comprenant les étapes consistant à mémoriser des données incluant un programme de télécommande et des données vocales de télécommande transférées depuis le support d'enregistrement d'une machine centrale dans le dispositif électronique portable, et
sur la base du programme de télécommande, délivrer des données vocales de télécommande conformément à une opération faite par un utilisateur.

8. Procédé de commande pour le dispositif électronique portable selon la revendication 7, dans lequel
ladite opération exécutée par l'utilisateur est détectée sur la base du programme de télécommande, et des données vocales de télécommande sont divisées en fréquences conformément à une valeur de division de fréquence correspondant à une opération détectée, et sont délivrées.

9. Procédé de commande pour le dispositif électronique portable selon la revendication 7, dans lequel de multiples segments de données vocales correspondant à au moins des opérations d'utilisateurs sont inclus dans des données vocales de télécommande, et
une opération d'utilisateur est détectée sur la base dudit programme de télécommande, et des données vocales de télécommande correspondant à l'opération détectée sont sélectionnées et délivrées.

10. Support d'enregistrement devant être chargé dans une machine centrale, qui comporte une fonction d'exécution de programme qui enregistre des données devant être transférées à un dispositif électronique portable connecté à la machine centrale, comprenant dans des données enregistrées de cette machine :
un programme de télécommande devant être exécuté par le dispositif électronique portable, et
des données vocales de télécommande devant être délivrées sur la base du programme de télécommande.

11. Support d'enregistrement selon la revendication 10, qui enregistre des données utilisées dans un dispositif électronique portable, dans lequel
ledit programme de télécommande inclut un programme de télécommande pour un dispositif formant objet de télécommande, ce qui a pour effet que, conjointement avec la détection d'une opération d'utilisateur, les données vocales de télécommande sont modifiées ou sélectionnées et délivrées conformément à l'opération détectée.

12. Support d'enregistrement selon la revendication 11, qui enregistre des données devant être utilisées dans un dispositif électronique portable, dans lequel
le programme de télécommande divise, conjointement avec la détection de l'opération d'utilisateur, des données vocales de télécommande au moyen d'une valeur de division de fréquence correspondant à l'opération détectée et délivre lesdites données à partir de seconds moyens de production de sons du dispositif électronique portable.

13. Support d'enregistrement selon la revendication 11, qui enregistre des données utilisées dans un dispositif électronique portable, dans lequel
de multiples segments vocaux correspondant au moins à des opérations d'utilisateur sont inclus dans les données vocales de télécommande, et
le programme de télécommande possède une fonction qui, conjointement avec la détection d'opérations d'utilisateur, sélectionne et délivre des données vocales de télécommande correspondant à l'opération détectée.
